# EUROPEAN PATENT APPLICATION

(11) **EP 2 405 311 A1**
(43) Date of publication of application: **11.01.2012**
(21) Application number: 11170212.2
(22) Date of filing: 16.06.2011
(51) Int. Cl.: G03H 1/00, G03H 1/22

(54) **Multi-viewpoint image recording medium and authenticity judgment method**

(30) Priority: 08.07.2010 JP 2010156102
(71) Applicant: Sony Corporation, Tokyo 108-0075 (JP); SONY DADC Corporation, Shinagawa-ku Tokyo 141-0001 (JP)
(72) Inventor: Shirakura, Akira, Shinagawa-ku, Tokyo 141-0001 (JP); Matsubara, Takashi, Shinagawa-ku, Tokyo 141-0001 (JP)
(74) Representative: Haines, Miles John L.S.

(57) **Abstract**

A multi-viewpoint image recording medium includes at least one main image recorded on the multi-viewpoint image recording medium and a plurality of sub-images, each having a display area smaller than a display area of the main image, recorded on the multi-viewpoint image recording medium. The main image and the plurality of sub-images are simultaneously displayed when the main image and the plurality of sub-images are reproduced. At least one of the plurality of sub-images changes in accordance with movement of a viewpoint.

## Description

The present invention relates to muiti-viewpoint image recording media and authenticity judgment methods. More specifically, the present invention relates to a multi-viewpoint image recording medium in which reproduced image information changes depending on an observation direction and an authenticity judgment method utilizing the multi-viewpoint image recording medium.

In recent years, a flood of unauthorized copy products in the market has become a serious problem. The outflow of unauthorized copy products into the market great damage to companies, such as a direct decrease in sales amount and a loss of credit. Thus, it is desirable to provide a method for guaranteeing that products circulating in the market are genuine products.

Also, the demand for protecting personal information has been increasing. Thus, it is desirable that cards having important information recorded thereon, identification cards, and the like have an authenticity judgment function and a forgery prevention function.

In order to address the above-described problems, holograms for stereoscopic display have been used for judging authenticity. In recent years, volume holograms have often been used, in which an interference pattern is recorded as a difference in refractive index in a recording layer. This is because, in order to forge a volume hologram, advanced technologies are necessary for forming a recording image, and recording material are difficult to obtain.

The authenticity judgment technologies include a technical element called "overt", which is obvious at first sight, and a technical element called "covert", which is difficult to perceive unless a device or the like is used.

An example of the covert technical element is inserting hidden characters into content to be recorded (e.g., see Japanese Unexamined Patent Application Publication No. 2004-262167). Another example is forming the content of a holograms with small characters so that the content can only be read using a microscope or the like, or mixing in spelling errors on purpose.

However, if the of such hidden or spelling errors in the content recorded on a hologram is recognized, the hologram may be reproduced in the form of an embossed hologram or the like using a method for producing an actually-captured hologram.

Accordingly, it is desirable to provide a multi-viewpoint image recording medium having a forgery prevention function and a covert element, and also to provide an authenticity judgment method utilizing the multi-viewpoint image recording medium.

### SUMMARY OF THE INVENTION

According to an embodiment of the present invention, there is provided a multi-viewpoint image recording medium including: at least one main image recorded on the muiti-viewpoint image recording medium; and a plurality of sub-images, each having a display area smaller than a display area of the main image, recorded on the muiti-viewpoint image recording medium. The main image and the plurality of sub-images are simultaneously displayed when the main image and the plurality of sub-images are reproduced. At least one of the plurality of sub-images changes in accordance with movement of a viewpoint.

According to another embodiment of the present invention, there is provided an authenticity judgment method for performing authenticity judgment on a multi-viewpoint image recording medium which includes identification information recorded on the mufti-viewpoint image recording medium, at least one main image recorded on the multi-viewpoint image recording medium, and a plurality of sub-images, each having a display area smaller than a display area of the main image, recorded on the multi-viewpoint image recording medium, the main image and the plurality of sub-images being simultaneously displayed when the main image and the plurality of sub-images are reproduced, at least one of the plurality of sub-images changing in accordance with movement of a viewpoint. The authenticity judgment method includes: preparing a database in which the identification information and an amount characterizing a change of at least one of the plurality of sub-images are registered in association with each other; and inquiring of the database about the identification information and the amount characterizing a change of at least one of the plurality of sub-images.

According to at least one embodiment, the forgery prevention characteristic and the authenticity judgment function of a multi-viewpoint image recording medium can be enhanced.

### BRIEF DESCRIPTION OF THE DRAWINGS

Figs. 1A to 1D are schematic diagrams illustrating a first example configuration of change of a sub-image;
Figs. 2A to 2D are schematic diagrams illustrating a second example configuration of change of a sub-image;
Figs. 3A to 3D are schematic diagrams illustrating a third example configuration of change of a sub-image;
Figs. 4A to 4D are schematic diagrams illustrating a fourth example configuration of change of a sub-image;
Figs. 5A to 5D are schematic diagrams illustrating a fifth example configuration of change of a sub-image;
Figs. 6A to 6D are schematic diagrams illustrating a sixth example configuration of change of a sub-image;
Figs. 7A to 7D are schematic diagrams illustrating a seventh example configuration of change of a sub-image;
Figs. 8A to 8C are diagrams illustrating examples of content recorded on a multi-viewpoint image recording medium;
Figs. 9A and 9B are diagrams illustrating an example of the case of assigning a number to each sub-image and specifying the position of a sub-image using the number;
Fig. 10 is a schematic diagram describing a hologram master to which sub-images have been added;
Fig. 11 is a schematic diagram illustrating an example configuration of a holographic stereogram production system;
Fig. 12 is a schematic diagram used for describing an example of image processing that is performed for producing a holographic stereogram;
Figs. 13A and 13B are schematic diagrams illustrating an example of an optical system of a holographic stereogram printer;
Figs. 14A and 14B are schematic diagrams illustrating another example of the optical system of the holographic stereogram printer;
Fig. 15 is a cross-sectional view illustrating an example of a hologram recording medium;
Figs. 16A to 16C are schematic diagrams illustrating a light irradiation process of photopolymerizable photopolymer;
Fig. 17 is a schematic diagram illustrating an example configuration of a recording medium feeding mechanism;
Fig. 18 is a flowchart illustrating an example of an exposure process;
Fig. 19 is a schematic diagram illustrating a contact copying device; and
Figs. 20A to 20D are schematic diagrams illustrating an example configuration of a multi-viewpoint image recording medium.

### DETAILED DESCRIPTION OF EMBODIMENTS

Hereinafter, a multi-viewpoint image recording medium and an authenticity judgment method according to embodiments of the present invention will be described. The description will be given in the following order.
0. Volume hologram
   Production of hologram master
   Copying using contact print
1. First embodiment
   Mufti-viewpoint image recording medium
   Examples of change of sub-image with change of observation direction
2. Second embodiment
   Examples of association with content to be recorded
3. Third embodiment
   Addition of sub-images to multi-surface master
4. Fourth embodiment
5. Modification

The embodiments described below are preferred specific examples of a multi-viewpoint image recording medium and an authenticity judgment method. In the following description, various limitations that are technically preferred are given. However, examples of the mufti-viewpoint image recording medium and the authenticity judgment method are not limited to the following embodiments as long as there is no particular description for limiting the present invention.

### 0. Volume hologram

Before describing the embodiments, a description will be given of a volume hologram in which recorded information changes in accordance with an observation direction, and a method for producing the volume hologram.

Examples of a method for producing a volume hologram include a process of producing an actually-captured hologram obtained by irradiating a subject with laser light, and a process of producing a holographic stereogram in which recording is performed on the basis of parallax images from multiple viewpoints. Hereinafter, the process of producing a holographic stereogram will be described.

The process of producing a holographic stereogram roughly includes a content producing step, in which images are obtained and edited, a hologram master producing step, and a replicating (mass producing) step. The images are obtained through image capturing or computer graphics. Each of a plurality of images obtained through the editing is transformed into a strip-shaped image using a cylindrical lens, for example. Interference fringes of object light of the images and reference light are sequentially recorded as strip-shaped element holograms on a hologram recording medium, whereby a hologram master is produced. Then, hologram recording media are brought into close contact with the hologram master and are irradiated with laser light, whereby holograms are replicated.

### Production of hologram master

### First, production of a hologram master will be described.

A holographic stereogram is produced by sequentially recording many images as original images, serving as strip-shaped element holograms, on a single hologram recording medium. Therefore, according to a method for a holographic stereogram, a hologram for reproducing a three-dimensional image can be produced using two-dimensional images of a subject viewed from different viewpoints as original images.

In the case of sequentially recording strip-shaped element holograms, a horizontal parallax only (HPO) holographic stereogram that has parallax only in the horizontal direction is produced. The HPO holographic stereogram can be printed in a short time, and high-definition recording can be realized. When a volume hologram recording medium is used, parallax in the vertical direction can also be recorded, and thus a full parallax (FP) holographic stereogram that has parallax both in the horizontal and vertical directions can be produced.

### Holographic stereogram production system

An example configuration of a holographic stereogram production system for producing a holographic stereogram will be described. Hereinafter, a description will be given of a system for forming a holographic stereogram having horizontal-direction parallax information by recording a plurality of strip-shaped element holograms on a single recording medium.

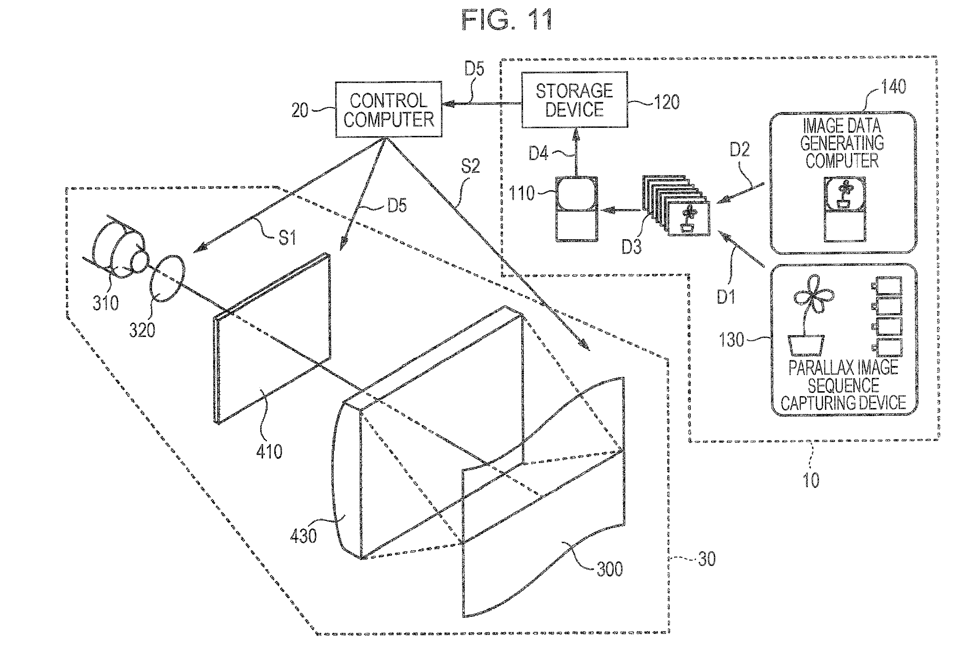

This holographic stereogram production system is a system for producing a so-called one-step holographic stereogram, in which a hologram recording medium with interference fringes of object light and reference light recorded thereon is regarded as a holographic stereogram. As illustrated in Fig. 11, the holographic stereogram production system includes a data processor 10 that processes image data to be recorded, a control computer 20 that controls the entire system, and a holographic stereogram printer 30 having an optical system for producing a holographic stereogram.

The data processor 10 generates a parallax image sequence D3 on the basis of a plurality of pieces of image data D1 that include parallax information and are supplied from a parallax image sequence capturing device 130 provided with a multiview camera, a moving camera, or the like. Alternatively, the data processor 10 may generate the parallax image sequence D3 on the basis of a plurality of pieces of image data D2 that include parallax information and are generated by an image data generating computer 140.

Here, the plurality of pieces of image data D1 that include the parallax information and are supplied from the parallax image sequence capturing device 130 are pieces of image data corresponding to a plurality of images. The pieces of image data D1 are obtained by, for example, capturing images of a real object from a plurality of different observation points in the horizontal direction using simultaneous capturing with a multiview camera or sequential capturing with a moving camera.

The pieces of image data D2 generated by the image data generating computer 140 are composed of a plurality of pieces of image data including parallax information. The pieces of image data D2 are pieces of image data corresponding to a plurality of computer design (CAD) images, computer graphics (CG) images, or the like created by sequentially giving parallax in the horizontal direction.

The data processor 10 performs predetermined image processing for a holographic stereogram on the parallax image sequence D3 using an image processing computer 110, thereby generating pieces of image data D4. Then, the data processor 10 stores the pieces of image data 4 in a storage device 120, such as a memory or a hard disk.

When recording images on a hologram recording medium, the data processor 10 sequentially reads out the pieces of image data D4 in units of images from the storage device 120, and transmits the pieces of image data to the control computer 20 (the pieces of image data transmitted to the control computer 20 are regarded as pieces of image data D5).

The control computer 20 drives the holographic stereogram printer 30. The images based on the pieces of image data D5 supplied from the data processor 10 are sequentially recorded as strip-shaped element holograms on a hologram recording medium 300, which is set in the holographic stereogram printer 30.

At this time, the control computer 20 controls a shutter 320, a display device 410, a recording medium feeding mechanism, and so forth provided in the holographic stereogram printer 30, as described below. Specifically, the control computer 20 transmits a control signal S1 to the shutter 320 to control opening/closing of the shutter 320. Also, the control computer 20 supplies the pieces of image data D5 to the display device 410 and causes the display device 410 to display the images based on the pieces of image data D5. Furthermore, the control computer 20 transmits a control signal S2 to the recording medium feeding mechanism to control an operation of feeding the hologram recording medium 300 by the recording medium feeding mechanism.

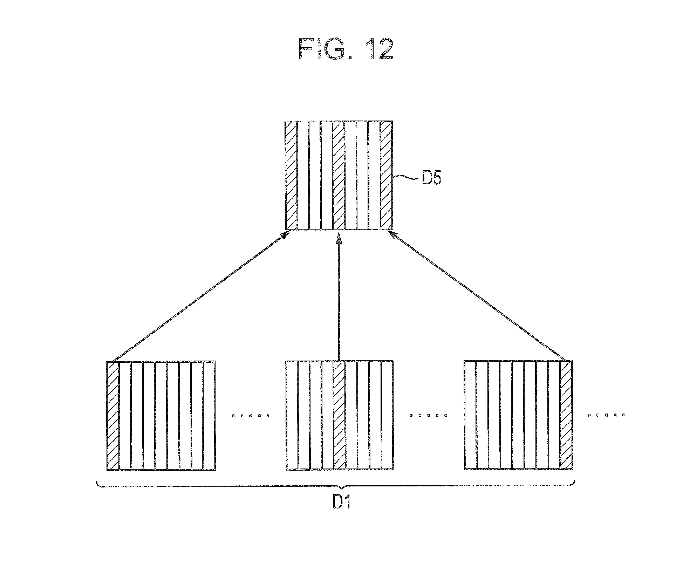

In the image processing, as illustrated in Fig. 12, each of the plurality of pieces of image data D1 including parallax information is divided into strips in the parallax direction, that is, in the horizontal (width) direction. Then, the strips obtained through the division are collected to reconstruct the processed image data D5, which is displayed on the display device 410.

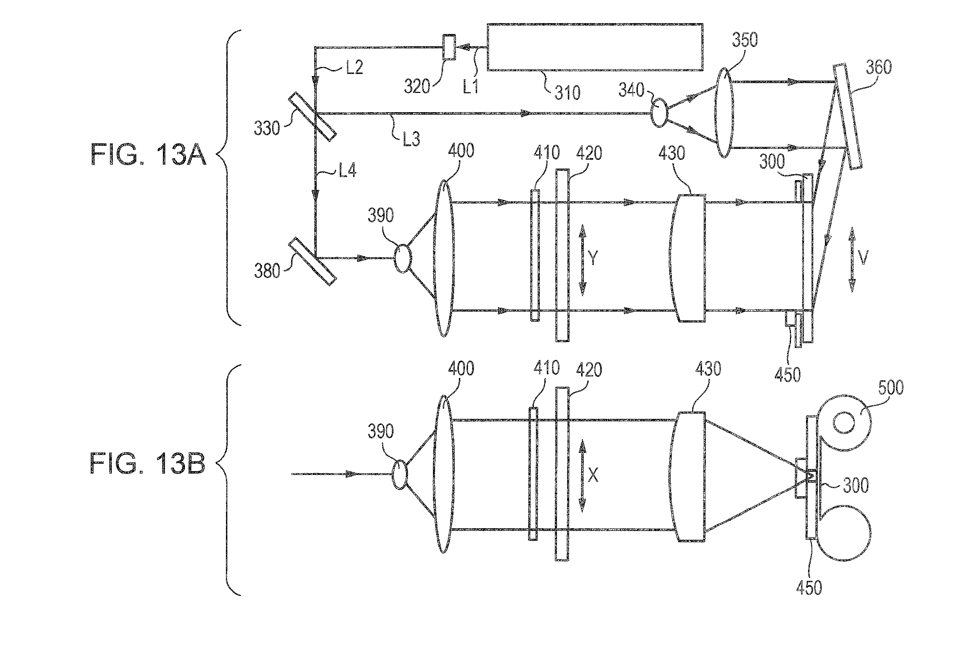

A further description will be given of the optical system of the foregoing holographic stereogram printer 30 with reference to Figs. 13A and 13B. Fig. 13A is a top view of the optical system of the entire holographic stereogram printer 30. Fig. 13B is a side view of the optical system of the entire holographic stereogram printer 30.

### Holographic stereogram printer

As illustrated in Figs. 13A and 13B, the holographic stereogram printer 30 includes a laser light source 310 that emits laser light of a certain wavelength, the shutter 320 that is disposed on an optical axis of laser light L1 emitted from the laser light source 310, a mirror 380, and a half mirror 330. Here, a laser light source that emits laser light having a wavelength of about 532 nm is used as the laser light source 310.

The shutter 320 is controlled by the control computer 20 so as to be closed when the hologram recording medium 300 is not exposed to light and to be opened when the hologram recording medium 300 is exposed to light. The half mirror 330 is used to separate laser light L2, which has passed through the shutter 320, into reference light and object light. Light L3 reflected by the half mirror 330 serves as reference light, and light L4 passed thorough the half mirror 330 serves as object light.

In this optical system, it is assumed that the optical path length of the reference light that is reflected by the half mirror 330 and enters the hologram recording medium 300 is almost the same as the optical path length of the object light that passes through the half mirror 330 and enters the hologram recording medium 300. Accordingly, the degree of interference between the reference light and object light increases, so that a holographic stereogram for obtaining a clearer reproduced image can be produced.

On the optical axis of the light L3 reflected by the half mirror 330, a cylindrical lens 340, a collimator lens 350 for making reference light parallel light, and a reflection mirror 360 that reflects the parallel light from the collimator lens 350 are disposed in this order as the optical system for reference light.

The light reflected by the half mirror 330 is first changed to divergent light by the cylindrical lens 340, and is then changed to parallel light by the collimator lens 350. After that, the light is reflected by the reflection mirror 360 and is incident on the rear surface of the hologram recording medium 300.

On the other hand, an optical system for object light is provided on the optical axis of the light L4 that has passed through the half mirror 330. The optical system includes the reflection mirror 380 reflecting the light that has passed through the half mirror 330, a spatial filter 390 including a convex lens and a pinhole, and a collimator lens 400 making object light parallel light. Furthermore, the optical system includes the display device 410 for displaying an image to be recorded, and a one-dimensional diffusion plate 420 for diffusing the light that has passed through the display device 410 in the width direction of element holograms. Furthermore, the optical system includes a cylindrical lens 430 for collecting the object light that has passed through the one-dimensional diffusion plate 420 onto the hologram recording medium 300, and an optical function plate 450 having a one-dimensional diffusion function.

The cylindrical lens 430 collects object light in a first parallax direction (short-side direction of element holograms or horizontal direction at the time of observation).

The optical function plate 450 one-dimensionally diffuses collected object light in the longitudinal direction of strip-shaped element holograms, and is used for handling movement of a viewpoint in the longitudinal direction. The optical function plate 450 has a fine structure. For example, a lenticular lens with a small pitch may be used as the optical function plate 450.

The light L4 that has passed through the half mirror 330 is reflected by the reflection mirror 380 and is then changed to divergent light from a point source by the spatial filter 390. Then, the divergent light is changed to parallel light by the collimator lens 400 and enters the display device 410. Here, a ×20 objective lens and a pinhole having a diameter of 20 µm are used for the spatial filter 390. The focal length of the collimator lens 400 is 100 mm.

The display device 410 is a projection-type image display device including a liquid crystal display, for example, and is controlled by the control computer 20 to display the image based on the image data D5 transmitted from the control computer 20. In this example, a monochrome liquid crystal panel having a number of pixels of 480 × 1068 and a size of 16.8 mm × 29.9 mm is used.

The light that has passed through the display device 410 becomes light modulated by the image displayed on the display device 410 and is diffused by the one-dimensional diffusion plate 420. The one-dimensional diffusion plate 420 may be disposed near the display device 410, for example, just before or after the display device 410. In this example, the one-dimensional diffusion plate 420 is disposed just after the display device 410.

Here, the one-dimensional diffusion plate 420 diffuses, to some extent, the light that has passed through the display device 410 in the width direction of element holograms in order to diffuse the light into the element holograms, thereby contributing to improve the image quality of the holographic stereogram to be produced.

At this time, a diffusion plate moving unit (not illustrated) is provided for the one-dimensional diffusion plate 420 to randomly move the one-dimensional diffusion plate 420 every time an element hologram is formed, thereby changing the position of the on-dimensional diffusion plate 420 for each element hologram. Accordingly, the noise at infinity when a hologram is observed can be reduced.

As the diffusion plate moving unit for moving the one-dimensional diffusion plate 420, a moving mechanism or the like for moving the one-dimensional diffusion plate 420 by a certain amount at a time using a mechanical unit, such as a stepping motor, may be employed. The moving direction of the one-dimensional diffusion plate 420 in this configuration may be the width direction of element holograms (the direction indicated by an arrow X in Fig. 13B) or the direction orthogonal thereto (the direction indicated by an arrow Y Fig. 13A). Furthermore, these directions may be used together, or the one-dimensional diffusion plate 420 may be moved in random directions. A reciprocal movement may also be employed.

Such disposition of the one-dimensional diffusion plate 420 allows the element holograms to be evenly exposed to light in the width direction. Accordingly, the image quality of the hologram to be obtained increases. However, it is necessary to increase the degree of diffusion of the one-dimensional diffusion plate 420 in order to realize even exposure. The object light that is diffused by the one-dimensional diffusion plate 420 spreads on the hologram recording medium 300, so that a range wilder than the width of the element holograms is exposed to light.

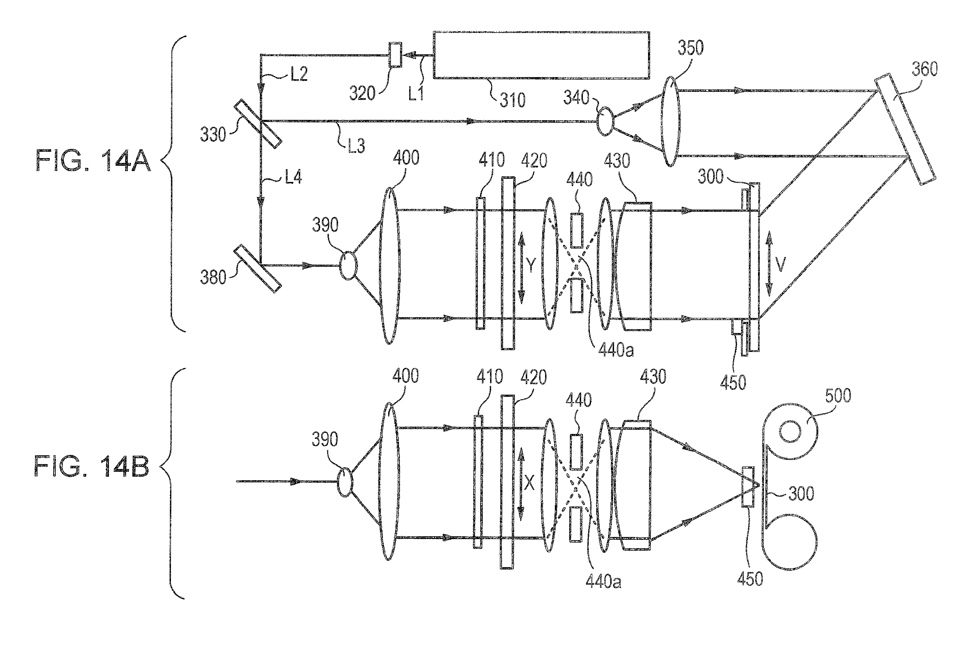

Then, as illustrated in Figs. 14A and 14B, a mask 440 is disposed in the optical path, and the image thereof is projected onto a recording material, so that the individual element holograms are exposed to light in an appropriate width. That is, even exposure and an appropriate exposure width are obtained using the diffusion by the one-dimensional diffusion plate 420 and the blocking of unnecessary light by the mask 440. The mask 440 may be disposed between the one-dimensional diffusion plate 420 and the cylindrical lens 430 as illustrated in Figs. 14A and 14B, or may be disposed near the hologram recording medium 300.

That is, the light that has passed through the display device 410 passes through the one-dimensional diffusion plate 420, is diffused in the width direction of the element holograms, and is converged on the hologram recording medium 300 by the cylindrical lens 430. At this time, due to the effect of the one-dimensional diffusion plate 420, the object light does not converge at one point but spreads in a certain range.

Referring to Figs. 14A and 14B, the light in a certain range at the center of the spread converged light passes through an opening portion 440a of the mask 440 and enters the hologram recording medium 300 in the form of object light. The shape of the object light is a strip shape.

As described above, the optical function plate 450 is disposed as a second diffusion plate. The object light is one-dimensionally diffused in the longitudinal direction of the strip-shaped element holograms, so that the hologram recording medium 300 is irradiated with the object light. Accordingly, the angle of view in the vertical direction of a reflective hologram can be increased.

In an ordinary holographic stereogram having parallax only in the horizontal direction, the optical function plate 450 has an optical function angle that is almost equivalent to the angle of view in the vertical direction of a final holographic stereogram. On the other hand, if the one-dimensional diffusion angle is narrowed, overlap of image information can be avoided in the case of recording a plurality of pieces of image information on a holographic stereogram.

The holographic stereogram printer 30 has a recording medium feeding mechanism 500 capable of intermittently feeding the hologram recording medium 300 by a distance corresponding to one element hologram under the control performed by the control computer 20. The recording medium feeding mechanism 500 is capable of intermittently feeding a film-shaped hologram recording medium on the basis of a control signal supplied from the control computer 20, as described below. In the case of producing a holographic stereogram in the holographic stereogram printer 30, images based on the respective pieces of image data of a parallax image sequence are sequentially recorded as strip-shaped element holograms on the hologram recording medium 300 that is set in the recording medium feeding mechanism 500.

### Example of hologram recording medium

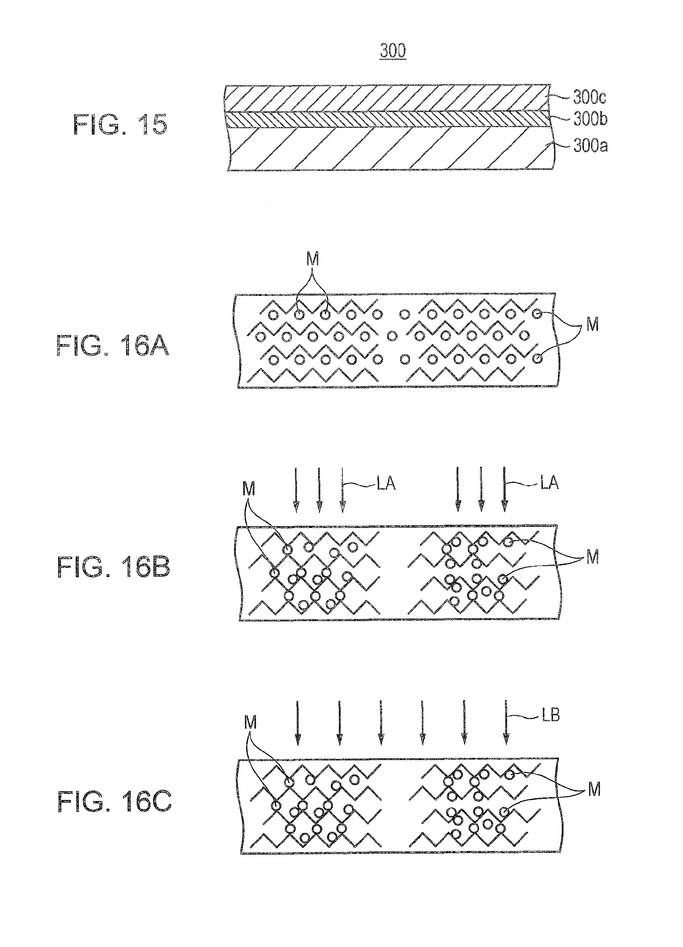

Now, the hologram recording medium 300 used in the above-described holographic stereogram production system will be described in detail. The hologram recording medium 300 is produced in the following manner. That is, as illustrated in Fig. 15, a photopolymer layer 300b made of photopolymerizable photopolymer is formed on a film base material 300a, which is tape-shaped. Furthermore, the upper surface of the photopolymer layer 300b is covered with a cover sheet 300c. Accordingly, a so-called coated-film-type recording medium is formed.

In photopolymerizable photopolymer in an initial state, monomers M are evenly dispersed in a matrix polymer, as illustrated in Fig. 16A. When the monomers M are irradiated with light LA having power of about 10 to 400 mJ/cm², the monomers M are polymerized in a portion exposed to the light LA, as illustrated in Fig. 16B. Then, as the polymerization proceeds, the monomers M move from a periphery, and the density of the monomers M varies in individual portions. This causes modulation of a refractive index. After that, as illustrated in Fig. 16C, when the entire surface is irradiated with ultraviolet rays or visible light LB having power of about 1000 mJ/cm², polymerization of the monomers M is completed. In this way, the refractive index of the photopolymerizable photopolymer changes in accordance with incident light. Thus, interference fringes that occur due to the interference between reference light and object light can be recorded as change in refractive index.

It is not necessary to perform a special development process on the hologram recording medium 300 formed of such photopolymerizable photopolymer after exposure. Accordingly, the configuration of the holographic stereogram printer 30 according to this embodiment that uses the hologram recording medium 300 having photopolymerizable photopolymer at a sensitive portion can be simplified.

### Recording medium feeding mechanism

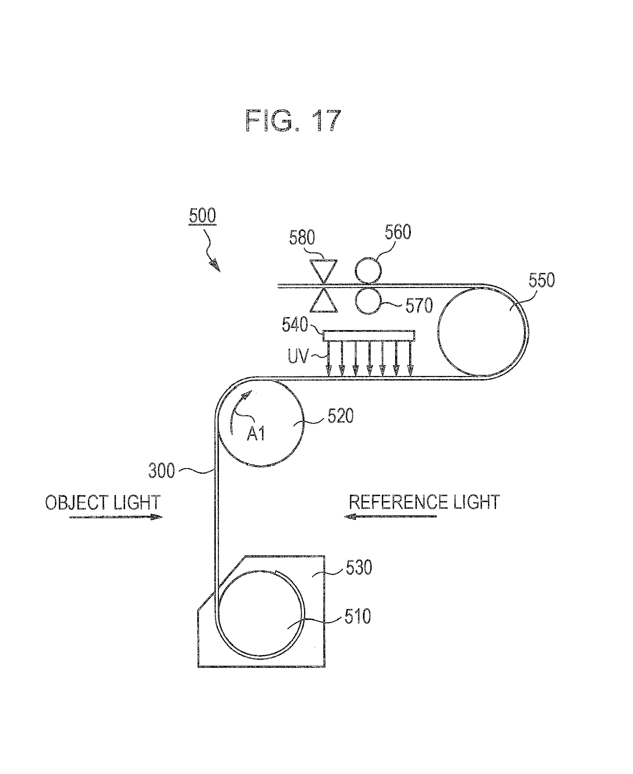

Next, the recording medium feeding mechanism 500 will be described in detail. Fig. 17 is an enlarged diagram of the recording medium feeding mechanism 500 of the holographic stereogram printer 30.

As illustrated in Fig. 17, the recording medium feeding mechanism 500 includes a roller 510 and an intermittent feeding roller 520. The hologram recording medium 300 is accommodated in a film cartridge 530 while being wound on the roller 510. In the recording medium feeding mechanism 500, the roller 510 in the film cartridge 530 mounted at a certain position is rotatably supported with a certain torque. Furthermore, the hologram recording medium 300 drawn from the film cartridge 530 can be held by the roller 510 and the intermittent feeding roller 520. At this time, in the recording medium feeding mechanism 500, the principal surface of the hologram recording medium 300 between the roller 510 and the intermittent feeding roller 520 is substantially vertical to object light. Accordingly, the hologram recording medium 300 is held. Also, the roller 510 and the intermittent feeding roller 520 are urged in the directions opposite to each other by a torsion coil spring. Accordingly, a certain tension is applied to the hologram recording medium 300 that is loaded to stretch between the roller 510 and the intermittent feeding roller 520.

The intermittent feeding roller 520 of the recording medium feeding mechanism 500 is connected to a stepping motor (not illustrated) and can be freely rotated in the direction indicated by an arrow A1 in Fig. 17 on the basis of a rotation force supplied from the stepping motor. This stepping motor rotates the intermittent feeding roller 520 by a certain angle corresponding to one element hologram every time one image has been exposed to light on the basis of the control signal S2 supplied from the control computer 20. Accordingly, the hologram recording medium 300 is fed by a distance corresponding to one element hologram every time one image has been exposed to light.

In the path of the hologram recording medium 300, an ultraviolet lamp 540 is disposed in the stage subsequent to the intermittent feeding roller 520 along the path. The ultraviolet lamp 540 is used for completing polymerization of the monomers M in the hologram recording medium 300 exposed to light, and is capable of emitting ultraviolet rays (UV) of a certain power to the hologram recording medium 300 fed by the intermittent feeding roller 520.

Furthermore, in the path of the hologram recording medium 300, a heat roller 550 that is rotatably supported, a pair of output rollers 560 and 570, and a cutter 580 are disposed in this order in the stage subsequent to the ultraviolet lamp 540.

Here, the output rollers 560 and 570 are configured to feed the hologram recording medium 300 so that the hologram recording medium 300 is wound in a state where the cover sheet 300c side thereof is in close contact with the peripheral surface of the heat roller 550 over the half round. The output rollers 560 and 570 are connected to a stepping motor (not illustrated) and are capable of being rotated on the basis of a rotation force supplied from the stepping motor. This stepping motor is rotated on the basis of the control signal S2 supplied from the control computer 20. That is, the output rollers 560 and 570 are rotated by a certain angle corresponding to one element hologram every time one image has been exposed to light, in synchronization with the rotation of the intermittent feeding roller 520. Accordingly, the hologram recording medium 300 is fed while reliably being in close contact with the peripheral surface of the heat roller 550 without being loosened between the intermittent feeding roller 520 and the output rollers 560 and 570.

The heat roller 550 has a heating unit such as a heater therein. The heating unit enables the peripheral surface of the heat roller 550 to be kept at a temperature of about 120 degrees. The heat roller 550 heats the photopolymer layer 300b of the fed hologram recording medium 300 via the cover sheet 300c. The heating increases the degree of modulation of the refractive index of the photopolymer layer 300b, thereby causing an image to be fixed to the hologram recording medium 300. Thus, the outer diameter of the heat roller 550 is determined so that the time period from when the hologram recording medium 300 is brought into contact with the peripheral surface of the heat roller 550 until when the hologram recording medium 300 moves away therefrom is sufficient to fix an image to the hologram recording medium 300.

The cutter 580 has a cutter drive mechanism (not illustrated) and is capable of cutting the hologram recording medium 300 fed thereto by driving the cutter drive mechanism. The cutter drive mechanism drives the cutter 580. That is, the cutter 580 is driven when an entire portion with images recorded therein of the hologram recording medium 300 is output after all the images based on respective pieces of image data of a parallax image sequence have been recorded on the hologram recording medium 300. Accordingly, the portion with the image data recorded therein is separated from the other portion and is output to the outside as a single holographic stereogram.

### Operation of holographic stereogram production system

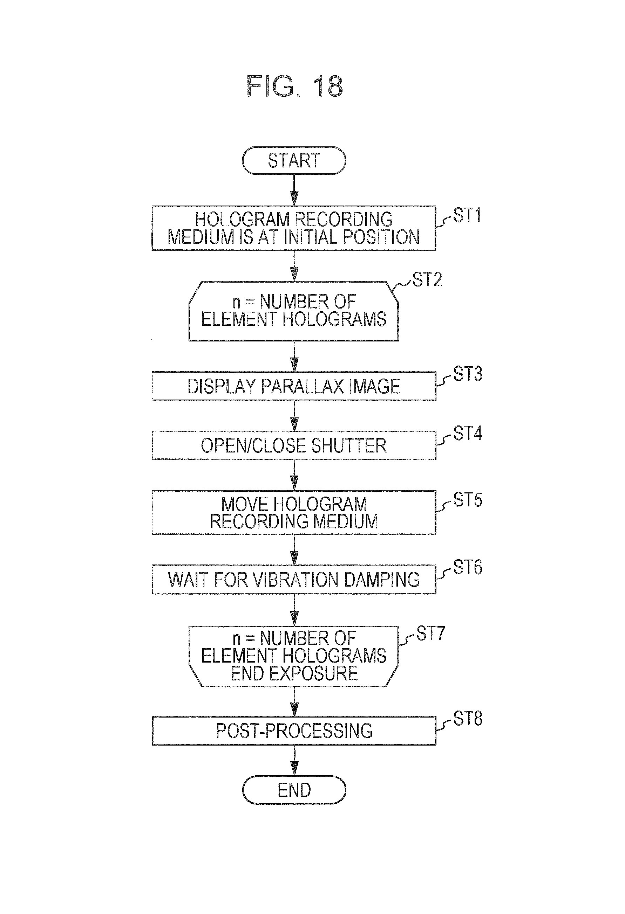

Now, a description will be given of the operation of producing a holographic stereogram under the control performed by the control computer 20 in the holographic stereogram production system having the above-described configuration, with reference to the flowchart illustrated in Fig. 18.

In step ST1, the hologram recording medium 300 is disposed at an initial position. Step ST2 is a step at the start end of a loop, and step ST7 is a step at the termination end of the loop. Every time a series of steps ST3 to ST6 are performed, a process for one element hologram ends. Steps ST3 to ST6 are repeated until all the element holograms (the number thereof is n) have been processed.

In step ST3, the control computer 20 drives the display device 410 on the basis of a piece of image data D5 supplied from the data processor 10 to display an image on the display device 410. In step ST4, the control computer 20 transmits a control signal S1 to the shutter 320, thereby opening the shutter 320 for a certain time period, so that the hologram recording medium 300 is exposed to light. At this time, in the laser light L2 that has been emitted from the laser light source 310 and has passed through the shutter 320, the light L3 reflected by the half mirror 330 enters the hologram recording medium 300 as reference light. At the same time, the light L4 that has passed through the half mirror 330 becomes projection light to which the image displayed on the display device 410 is projected. The projection light enters the hologram recording medium 300 as objet light. Accordingly, one image displayed on the display device 410 is recorded as a strip-shaped element hologram on the hologram recording medium 300.

After the one image has been recorded, the process proceeds to step ST5, where the control computer 20 transmits a control signal S2 to the stepping motor that drives the intermittent feeding roller 520 and the stepping motor that drives the output rollers 560 and 570. By driving the stepping motors, the hologram recording medium 300 can be fed by a distance corresponding to one element hologram. After the hologram recording medium 300 has been fed, vibration damping is waited for (step ST6).

Then, the process returns to step ST3, where the control computer 20 drives the display device 410 on the basis of the next piece of image data D5 supplied from the data processor 10, thereby causing the display device 410 to display the next image. After that, the operations described above (ST4, ST5, and ST6) are sequentially repeated, whereby the individual images based on the pieces of image data D5 supplied from the data processor 10 are sequentially recorded as strip-shaped element holograms on the hologram recording medium 300.

That is, in this holographic stereogram production system, the images based on the pieces of image data stored in the storage device 120 are sequentially displayed on the display device 410. At this time, the shutter 320 is opened for the individual images, and the images are sequentially recorded as strip-shaped element holograms on the hologram recording medium 300. At this time, the hologram recording medium 300 is fed by a distance corresponding to one element hologram every time one image is recorded. Thus, the element holograms are sequentially arranged in the horizontal direction at the time of observation. Accordingly, the images having horizontal-direction parallax information are recorded on the hologram recording medium 300 as a plurality of element holograms that are sequential in the horizontal direction. In this way, a holographic stereogram having parallax in the horizontal direction is obtained.

The process from the start to the exposure step has been described above. After that, post-processing (step ST8) is performed as necessary, and then the print process is completed. In the case of using photopolymer that is to be irradiated with ultraviolet rays and that is to be heated, the configuration illustrated in Fig. 17 may be employed. That is, ultraviolet rays UV are emitted from the ultraviolet lamp 540. Accordingly, polymerization of monomers M is completed. Subsequently, the hologram recording medium 300 is heated by the heat roller 550, so that an image is fixed.

After the portion with images recorded therein has been output to the outside, the control computer 20 supplies a control signal S2 to the cutter drive mechanism to drive the cutter drive mechanism. Accordingly, the portion with the images recorded therein of the hologram recording medium 300 is separated by the cutter 580, and is output to the outside as a sheet of holographic stereogram. In this way, a holographic stereogram having parallax in the horizontal direction is produced.

### Copying using contact print

In the above-described manner, a volume hologram with image information recorded thereon can be obtained. Furthermore, the image information recorded on the volume hologram can be reproduced, and the image information can be copied on another hologram recording medium using the reproduction light generated at the time as object light. Such a method is called "contact print" because a hologram with image information recorded thereon is used as a master and recording is performed in a state where another hologram recording medium is in close contact with the master. Hereafter, copying using contact print is referred to as "contact copying".

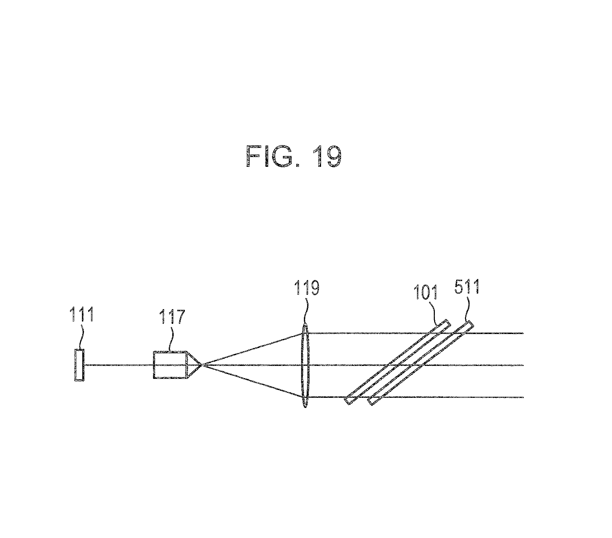

Fig. 19 is a schematic diagram illustrating the overview of a contact copying device. As illustrated in Fig. 19, in the contact copying device, laser light emitted from a laser light source 111 is expanded by a spatial filter 117 and enters a collimation lens 119. A hologram recording medium 101 having a layer made of a photosensitive material and a hologram master 511 are irradiated with the laser light that has been changed to parallel light by the collimation lens 119 (S polarization).

The hologram master 511 is a Lippmann hologram, for example. The hologram recording medium 101 having a layer made of a photosensitive material and the hologram master 511 are directly brought into close contact with each other or are brought into close contact with each other via a refractive index adjusting solution (referred to as index matching solution). An interference pattern formed by the fight diffracted by the hologram master 511 and the incident laser light is recorded on the hologram recording medium 101.

### 1. First embodiment

Hereinafter, a first embodiment will be described. In this embodiment, a hologram recording medium is used as a multi-viewpoint image recording medium,

According to the first embodiment, a plurality of pieces of image information are recorded on a hologram recording medium. The content recorded on the hologram recording medium includes at least one main image and a plurality of sub-images, each having a display area smaller than that of the main image. At least one of the plurality of sub-images that are displayed together with the main image during reproduction changes in accordance with movement of a viewpoint of observing the hologram recording medium. Here, the main image is an image that is mainly perceived by an observer among the images displayed on the medium.

The sub-images serve as hidden characters, which enhances the forgery prevention characteristic of the hologram recording medium. Furthermore, even if the existence of the sub-images is recognized, change of at least one of the sub-images is difficult to be perceived due to the size of the display areas thereof. Accordingly, a further advanced authenticity judgment function can be given to the hologram recording medium.

In an actually-captured hologram, it is difficult to produce a master on which content with continuous changes is recorded. Thus, a sub-image that changes in accordance with movement of a viewpoint of observation is created using a method for a holographic stereogram and is recorded on a volume hologram, whereby the volume hologram functions as a hologram recording medium having an extremely high forgery prevention effect. Of course, a computer generated hologram may be used instead of the holographic stereogram.

Therefore, according to the first embodiment, a multi-viewpoint image recording medium having a higher forgery prevention effect than a multi-viewpoint image recording medium on which hidden characters are simply recorded can be obtained.

### Multi-viewpoint image recording medium

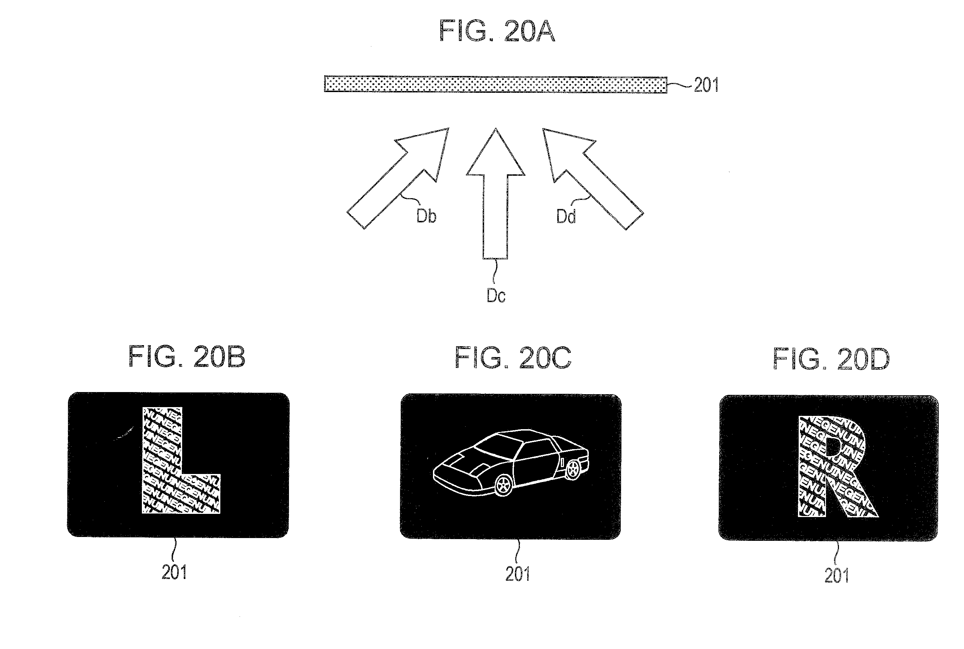

Figs. 20A to 20D are schematic diagrams illustrating an example configuration of a multi-viewpoint image recording medium. The multi-viewpoint image recording medium is a volume hologram on which a plurality of images are recorded so that the images change in accordance with movement of a viewpoint of observation. In the example configuration illustrated in Figs. 20A to 20D, three main images are recorded so that the three main images change from one after another in accordance with the viewpoint of an observer. Specifically, when the hologram recording medium 201 is observed from the left side, the image information "L" is observed as illustrated in Fig. 20B. When the hologram recording medium 201 is observed from the front side, the image information of an automobile is observed as illustrated in Fig. 20C. When the hologram recording medium 201 is observed from the right side, the image information "R" is observed as illustrated in Fig. 20D. These pieces of image information may suddenly change at a certain boundary or may continuously change in accordance with the change of a viewpoint of an observer.

Checking such change of the main images and the content recorded on the multi-viewpoint image recording medium is a first point of authenticity judgment of the multi-viewpoint image recording medium. The number of main images to be changed may be three in one parallax direction, so that an observer can easily recognize the change of the image information.

In the example configuration illustrated in Figs. 20A to 20D, a plurality of sub-images each having a display area smaller than that of a main image are recorded in the region where "L" and "R" are displayed, as well as the above-described pieces of image information of "L", "R", and the automobile. For example, as illustrated in Figs. 20B and 20D, a group of sub-images is recorded in which a single alphabetic character serves as a unit. That is, in the examples illustrated in Figs. 20B and 20D, each of the small alphabetic characters serves as a sub-image, and a microtext "GENUINE" is recorded in which each of the sub-images serves as a unit. Furthermore, some of the characters "G" are recorded at an angle different from the other characters in the microtext. Instead of varying the angle of the sub-images, spelling errors may be intentionally inserted.

In the example illustrated in Figs. 20A to 20D, these sub-images serve as hidden characters. From the viewpoint of preventing forgery, the display area of the sub-images is small. Here, the display area of the sub-images means the area of the region that covers the displayed sub-images. For if a sub-image is a character, a rectangle including the character corresponds the display area. In the case defining the size of each sub-image on the basis of the display area of the sub-image, the display area of the sub-image is preferably 50 mm² or less, more preferably 10 mm² or less, and still more preferably 2 mm² or less. Also, if the display area of each sub-image is one tenth or less of the display area of a main image, attention of an observer is mainly focused on the main image, which preferably enhances the effect of recording sub-images as hidden characters.

Here, the reason why the display area of each sub-image is preferably 50 mm² or less is as follows. That is, the size of a typical forgery prevention label is 30 mm square or smaller. When it is assumed that the area of a main image is 500 mm² in the entire area of the label (900 mm²), one tenth of 500 mm² is 50 mm².

The display area of each sub-image may be appropriately set by an issuer of the multi-viewpoint image recording medium as necessary. Accordingly, an effect of recording dynamic sub-images can be selected from among a level in which the sub-images are visually perceived (overt), a level in which the sub-images are perceived using a magnifying glass (covert), and a level in which the sub-images are perceived by examining the details using a microscope (forensic), in accordance with the display area of each sub-image.

The effect of the overt level, in which the display area of each sub-image is 50 mm² or less, is that anyone can visually recognize the existence of dynamic sub-images, and that the existence is announced as a point of authenticity judgment. The effect of the covert level, in which the display area of each sub-image is 10 mm² or less, is that dynamic sub-images are not easily perceived, and that the existence is not announced. In this case, a manufacturer of forged articles may manufacture forged articles on which only static sub-images are recorded without being aware of the dynamic sub-images, but a provider of genuine articles can announce the existence of the dynamic sub-images as a point of authenticity judgment at an appropriate timing. The forensic level, in which the display area of each sub-image is 2 mm² or less, is effective in the case of identifying a seized article as evidence because the difference between a genuine article and a forged article is reliably determined if a professional strictly examines the articles.

As described above, the display area of each sub-image can be set in accordance with a desirable effect among the effects of the overt, covert, and forensic levels for the multi-viewpoint image recording medium. Thus, the display area of each sub-image may be so small that the sub-image is not visually perceived. In this case, the sub-image may have such a display area that the existence of the sub-image is recognized by appropriately selecting and using a device, such as a magnifying glass or a microscope. Alternatively, sub-images may be displayed in a 1 m square poster with a character height of 50 mm, so that the sub-images function as hidden characters when viewed from a distance. Note that the display areas of a plurality of sub-images are not necessarily the same, and may be set stepwise.

In this embodiment, at least one of the above-described sub-images changes in accordance with the viewpoint of an observer. Checking the existence of sub-images and change of at least one of the sub-images according to the viewpoint of the observer is a second point of authenticity judgment of the multi-viewpoint image recording medium. In a hologram, image information to be reproduced is changed by changing any of an incident direction of illumination light, an observation direction of the hologram, and the orientation of the hologram. Thus, in this specification, change of an observation direction includes change of the incident direction of illumination light and change of the orientation of the multi-viewpoint image recording medium itself.

### Examples of change of sub-image with change of observation direction

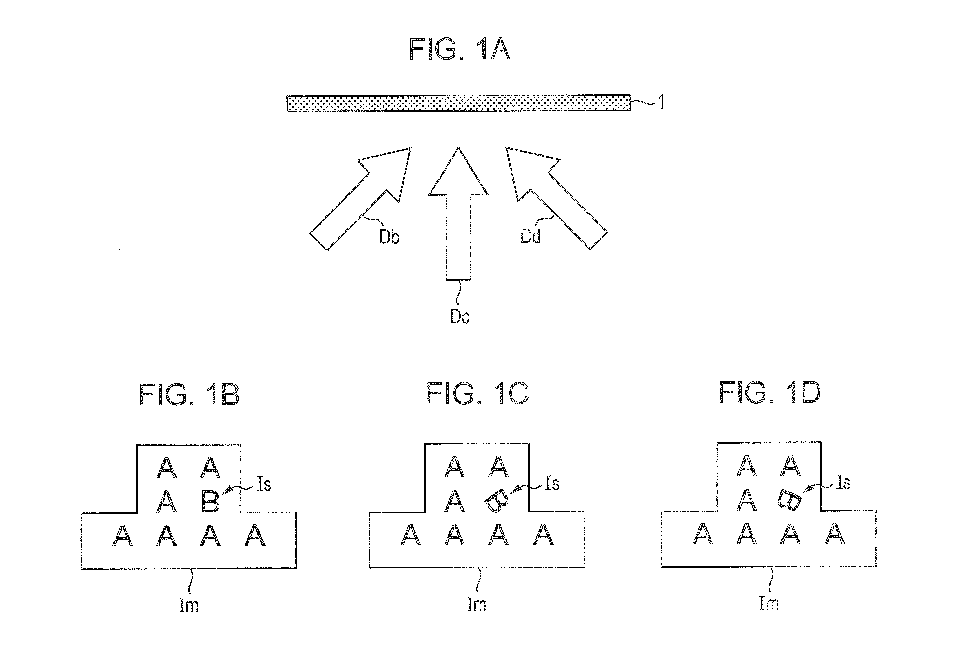

Next, examples of content that is recorded on a multi-viewpoint image recording medium will be described. In the examples described below, a group G of sub-images Is is recorded in the inner region of an inverted-T-shaped main image Im. The examples of content illustrated in Figs. 1A to 10 schematically show main images and sub-images. Note that the display areas of the main images and sub-images illustrated in these figures are different from actual display areas.

Hereinafter, a description will be given of a case where images having parallax in the horizontal direction are recorded on a hologram recording medium. Alternatively, images having parallax in another direction, such as the vertical direction or other directions, may be recorded thereon. Also, the main image Im may be recorded so that the main image Im changes in accordance with movement of a viewpoint.

The term "sub-images" is a collective term of micro-characters, micro-symbols, micro-patterns, and the like. The content of image information to be recorded as the sub-images is not limited. The content of the sub-images can be freely selected as necessary by the issuer of the multi-viewpoint image recording medium. Also, the number of sub-images that change can be freely selected as necessary by the issuer of the multi-viewpoint image recording medium.

### First example configuration

Figs. 1A to 1D are schematic diagrams illustrating a first example configuration of changes of a sub-image. As illustrated in Fig. 1A, when the observation direction with respect to a hologram recording medium 1 is changed from Db to Dc and from Dc to Dd, the sub-image continuously changes in accordance with the movement of the viewpoint of an observer. That is, the image information perceived by the observer sequentially changes from the image information illustrated in Fig. 1B to the image information illustrated in Fig. 1C and then to the image information illustrated in Fig. 1D.

In the example illustrated in Figs. 1A to 1D, image information is recorded so that the character "B" in the sub-images is rotates around an axis that is substantially vertical to a recording surface. The rotation direction of the sub-image Is may be clockwise or counterclockwise. Alternatively, the rotation direction may be reversed at a certain viewpoint.

### Second example configuration

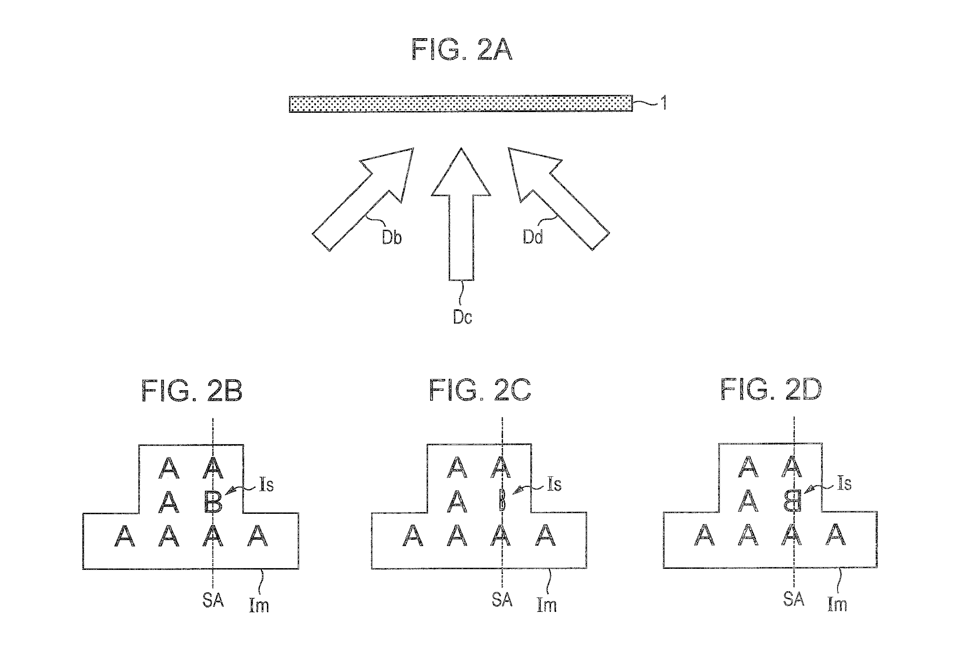

Figs. 2A to 2D are schematic diagrams illustrating a second example configuration of changes of a sub-image. As illustrated in Fig. 2A, when the observation direction with respect to the hologram recording medium 1 is changed from Db to Dc and from Dc to Dd, the sub-image continuously changes in accordance with the movement of the viewpoint of an observer.

That is, the image information perceived by the observer sequentially changes from the image information illustrated in Fig. 2B to the image information illustrated in Fig. 2C and then to the image information illustrated in Fig. 2D.

In the example illustrated in Figs. 2A to 2D, image information is recorded so that the character "B" in the sub-images Is rotates around a rotation axis SA including the recording surface. The rotation axis SA may be oriented in any direction in the plane. Also, the rotation direction with respect to the rotation axis SA may be clockwise or counterclockwise.

### Third example configuration

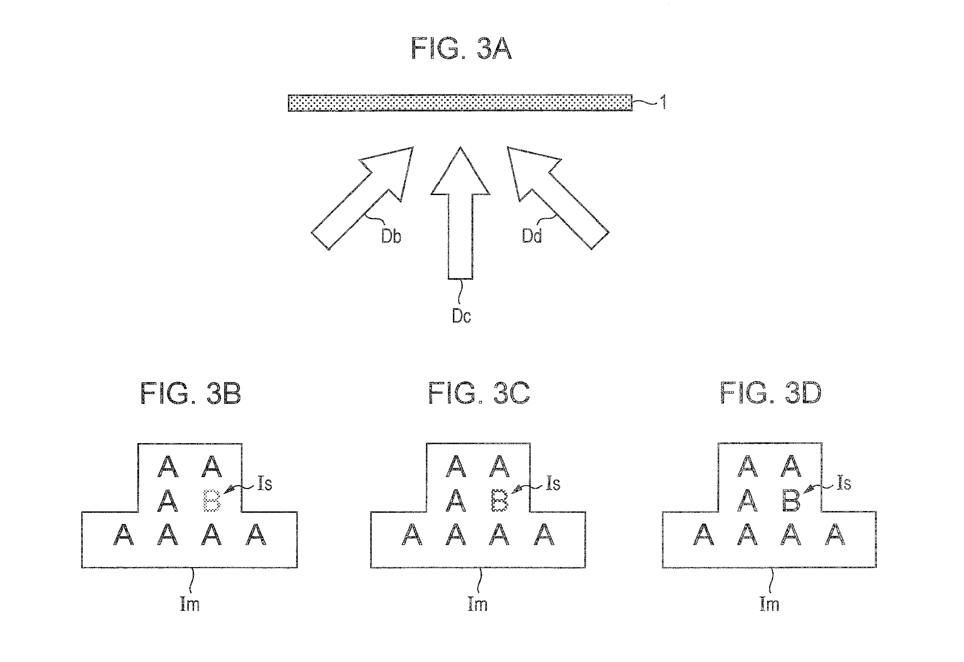

Figs. 3A to 3D are schematic diagrams illustrating a third example configuration of changes of a sub-image. As illustrated in Fig. 3A, when the observation direction with respect to the hologram recording medium 1 is changed from Db to Dc and from Dc to Dd, the sub-image continuously changes in accordance with the movement of the viewpoint of an observer. That is, the image information perceived by the observer sequentially changes from the image information illustrated in Fig. 3B to the image information illustrated in Fig. 3C and then to the image information illustrated in Fig. 3D.

In the example illustrated in Figs. 3A to 3D, image information is recorded so that the brightness of the character "B" in the sub-images Is continuously changes when the character "B" is being observed. That is, the observer perceives that the visual brightness of the character "B" continuously changes. Here, the brightness means a luminous quantity that is obtained by evaluating the intensity of light travelling from a reflection surface or transmission surface toward the observer on the basis of the sensitivity of human eyes (CIE standard spectral luminous efficacy efficiency V [λ]). In the case of a hologram, the brightness of an image that is seen in diffracted light varies in accordance with the intensity of illumination light. Thus, the evaluation is performed using a relative value obtained at illuminating in the same condition.

For example, image information is recorded so that the character "B", which is not perceived when the hologram recording medium 1 is observed in the observation direction Db, is clearly perceived in accordance with movement of a viewpoint. Such recording is difficult in an actually-captured hologram. Alternatively, effects of fade-in and fade-out may be given to the sub-image Is.

### Fourth example configuration

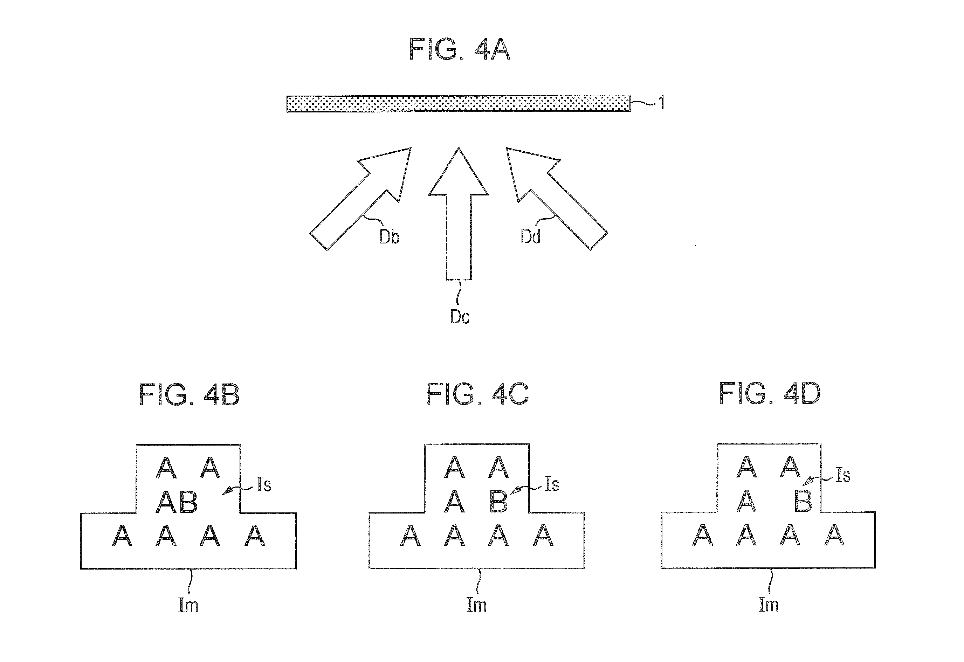

Figs. 4A to 4D are schematic diagrams illustrating a fourth example configuration of changes of a sub-image. As illustrated in Fig. 4A, when the observation direction with respect to the hologram recording medium 1 is changed from Db to Dc and from Dc to Dd, the sub-image continuously changes in accordance with the movement of the viewpoint of an observer. That is, the image information perceived by the observer sequentially changes from the image information illustrated in Fig. 4B to the image information illustrated in Fig. 4C and then to the image information illustrated in Fig. 4D.

In the example illustrated in Figs. 4A to 4D, image information is recorded so that the display position of the character "B" among the sub-images Is continuously changes. For example, image information is recorded so that the character "B", which is close to the character "A" on the left when the hologram recording medium 1 is observed in the observation direction Db, gradually moves apart from the character "A" in accordance with the movement of a viewpoint. The amount of change of the sub-image Is may be freely set with respect to a movement direction, a distance, and movement of a viewpoint. Also, the trail of the movement may be along a certain curve, a folded line, etc.

### Fifth example configuration

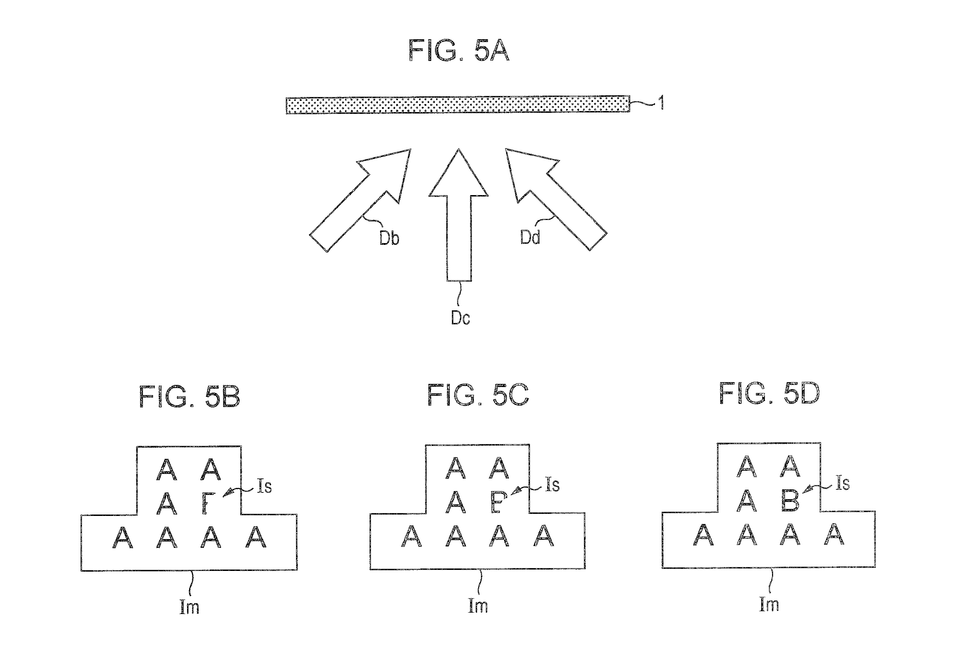

Figs. 5A to 5D are schematic diagrams illustrating a fifth example configuration of changes of a sub-image. As illustrated in Fig. 5A, when the observation direction with respect to the hologram recording medium 1 is changed from Db to Dc and from Dc to Dd, the sub-image continuously changes in accordance with the movement of the viewpoint of an observer. That is, the image information perceived by the observer sequentially changes from the image information illustrated in Fig. 5B to the image information illustrated in Fig. 5C and then to the image information illustrated in Fig. 5D.

In the example illustrated in Figs. 5A to 5D, image information is recorded so that the shape of the character "B" among the sub-images Is continuously changes (morphing). Here, the shape means the shape of the entire portion of a single unit of a sub-image. For example, image information is recorded so that the character "B", which has a lacking portion when the hologram recording medium 1 is observed in the observation direction Db, can be seen in the whole shape thereof in accordance with the movement of a viewpoint. Alternatively, the character "B" may be changed into another character, symbol, or figure in accordance with the movement of a viewpoint. In the case of using a micro-character as the sub-image Is, the font thereof may be gradually changed.

### Sixth example configuration

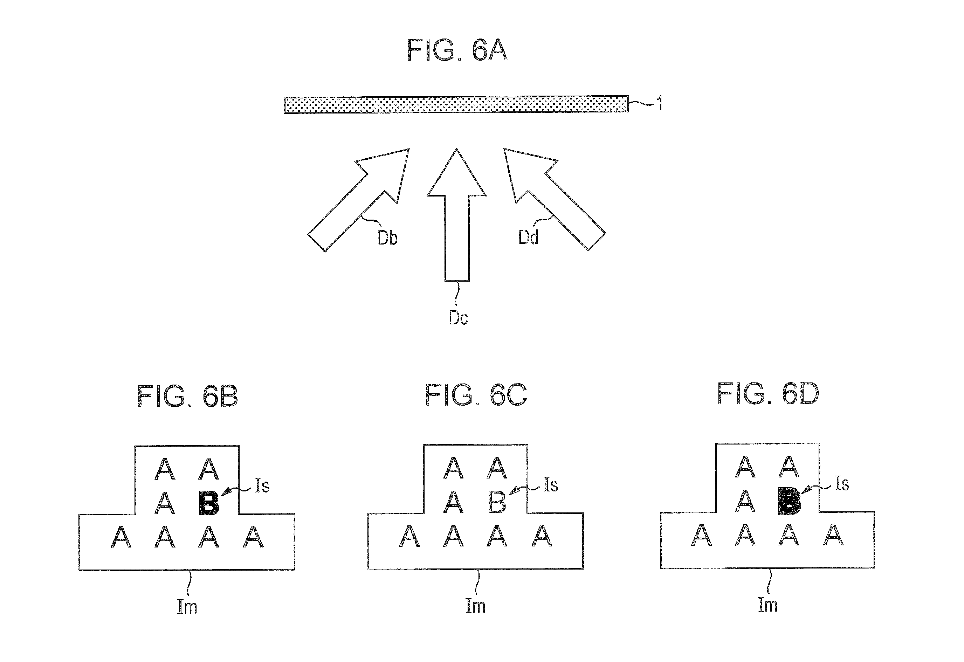

Figs. 6A to 6D are schematic diagrams illustrating a sixth example configuration of changes of a sub-image. As illustrated in Fig. 6A, when the observation direction with respect to the hologram recording medium 1 is changed from Db to Dc and from Dc to Dd, the sub-image continuously changes in accordance with the movement of the viewpoint of an observer. That is, the image information perceived by the observer sequentially changes from the image information illustrated in Fig. 6B to the image information illustrated in Fig. 6C and then to the image information illustrated in Fig. 6D.

In the example illustrated in Figs. 6A to 6D, image information is recorded so that the thickness of the line of the character "B" among the sub-images Is continuously changes. In this way, the thickness of the line forming the sub-image Is may be changed.

### Seventh example configuration

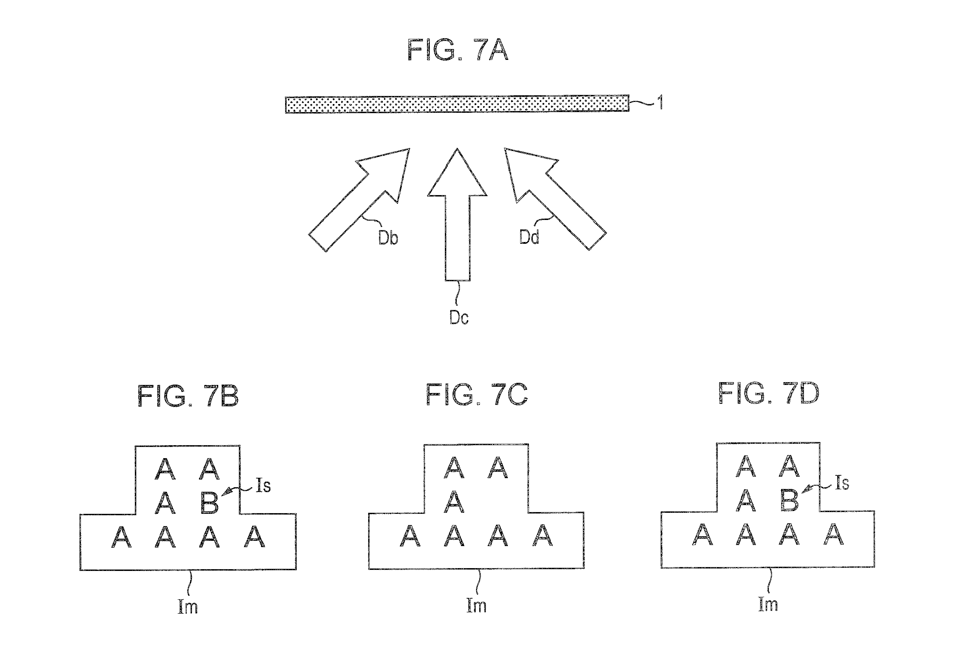

Figs. 7A to 7D are schematic diagrams illustrating a seventh example configuration of changes of a sub-image. As illustrated in Fig. 7A, when the observation direction with respect to the hologram recording medium 1 is changed from Db to Dc and from Dc to Dd, the sub-image continuously changes in accordance with the movement of the viewpoint of an observer. That is, the image information perceived by the observer sequentially changes from the image information illustrated in Fig. 7B to the image information illustrated in Fig. 7C and then to the image information illustrated in Fig. 7D.

In the example illustrated in Figs. 7A to 7D, image information is recorded so that the character "B" among the sub-images Is becomes invisible in a range near to a certain observation direction. In this way, the sub-image Is may change in a discontinuous manner different from fade-in and fade-out.

### 2. Second embodiment

In a second embodiment, information about the manner of change of a sub-image is determined as output information associated with certain input information. That is, an amount characterizing change of a sub-image is determined through specific association.

When such association is performed, the sub-image that is to be changed and the manner of the change are specified. Accordingly, a multi-viewpoint image recording medium in which a sub-image recorded thereon changes in a manner different from the association can be judged to be a forged product, so that a further advanced authenticity judgment function can be given to a multi-viewpoint image recording medium.

Here, information about multi-viewpoint image recording media or articles that are to be combined with the multi-viewpoint image recording media can be selected as the input information, for example, the number of products, a manufacturer's serial number, a manufacturing plant, the date of manufacture, the country of manufacture, the date of sale, the country of sale, a best-before date, a freshness date, a price, the name of product, the number of surfaces of a master, the name of customer, the shape of a recording medium, the dimension of a recording medium, and identification information given to a recording medium. Such input information may be arbitrarily set by the issuer of multi-viewpoint image recording media.

The output information with respect to the input information includes, for example, a dynamic parameter, a number parameter of targets to be changed, and a target parameter for specifying the sub-image to be changed. The dynamic parameter is a parameter for specifying the manner of change of a sub-image among the manners of change described in the first embodiment. The number parameter is a parameter for specifying the number of sub-images to be changed. The target parameter is a parameter for specifying the sub-image to be changed among a plurality of sub-images. The output information other than the above-described information may be arbitrarily set by the issuer of multi-viewpoint image recording media.

### Examples of association with content to be recorded

Hereinafter, examples of association between input information and content recorded on a multi-viewpoint image recording medium will be described. The description will be given below under the assumption that a group G of sub-images Is is recorded in the region inside an inverted-T-shaped main image Im.

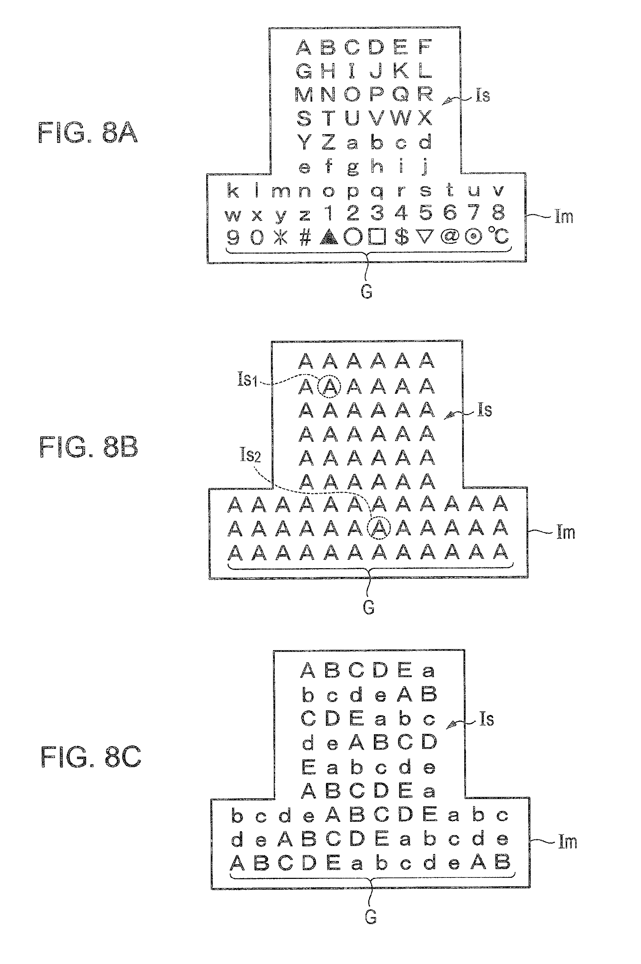

Figs. 8A to 8C illustrate examples of content recorded on a multi-viewpoint image recording medium. The examples of content illustrated in Figs. 8A to 8C schematically show image information that is recognized at a certain viewpoint. Fig. 8A illustrates an example in which alphabetic characters, numeric characters, and symbols are disposed. As illustrated in Fig. 8A, the individual sub-images may be different from one another. Fig. 8B is an example in which many alphabetic characters "A" are disposed. As illustrated in Fig. 8B, all the sub-images may be the same. Fig. 8C illustrates an example in which a character string having continuity is disposed. As illustrated in Fig. 8C, a character string having regularity may be used. Alternatively, widely used values, such as a circular constant, base of natural logarithm, and Euler's constant may be used, and also a physical constant may be used.

### First example configuration

Table 1 shows an example in which the dates of manufacture of articles are used as input information for the content illustrated in Fig. 8A.

**Table 1**

| Input information | Output information | | | |
|---|---|---|---|---|
| Date of manufacture | Dynamic | Number | Target 1 | Target 2 |
| 01.04.2010 | Rotation 1 | 2 | Y | 7 |
| 05.04.2010 | Rotation 1 | 2 | Y | 8 |
| 12.04.2010 | Rotation 1 | 2 | Y | 9 |
| 07.05.2010 | Rotation 1 | 2 | Y | 0 |
| 25.05.2010 | Rotation 1 | 2 | Y | 1 |
| 29.05.2010 | Rotation 1 | 2 | Y | 2 |
| 01.06.2010 | Rotation 1 | 2 | Y | 3 |
| 15.06.2010 | Rotation 1 | 2 | Y | 4 |

In Table 1, a dynamic parameter is abbreviated as "Dynamic", a number parameter is abbreviated as "Number", and target parameters are abbreviated as "Target 1" and "Target 2". The number of rows and columns of the table is not limited to that in Table 1, and may be increased or decreased if necessary. This is the same in the following Tables 2 to 15.

In Table 1, in the row where the date of manufacture is 01.04.2010, the dynamic parameter is "Rotation 1", the number parameter is "2", and the target parameters are "Y" and "7". That is, among the sub-images Is illustrated in Fig. 8A, the alphabetic character "Y" and the numeric character "7" are regarded as sub-images that change in accordance with the movement of the viewpoint of an observer. Also, when it is assumed that "Rotation 1" represents rotation around an axis that is substantially vertical to a recording surface, recording is performed so that the alphabetic character "Y" and the numeric character "7" change in the manner illustrated in Figs. 1B to 1D because the dynamic parameter is "Rotation 1".

### Second example configuration

Table 2 shows an example in which the countries of sale of articles are used as input information for the content illustrated in Fig. 8A.

**Table 2**

| Input information | Output information | | | | |
|---|---|---|---|---|---|
| Country of sale | Dynamic | Number | Target 1 | Target 2 | Target 3 |
| A | Rotation 1 | 2 | Y | 7 | |
| B | Brightness + Shape | 2 | K | 5 | |
| | Disappearance | 2 | g | $ | |
| C | Thickness of line | 3 | Q | y | ∇ |
| | Change of position | 1 | H | | |
| D | Shape | 2 | c | O | |
| E | Change of position | 3 | F | a | |

In the example shown in Table 1, all the pieces of output information corresponding to the dates of manufacture serving as input information are the same. In contrast, the example shown in Table 2 is an example in which output information varies depending on input information. For example, in a multi-viewpoint image recording medium attached to an article that is to be sold in the country "A", recording is performed so that the alphabetic character "Y" and the numeric character "7" change in the manner illustrated in Figs. 1B to 1D. On the other hand, in a multi-viewpoint image recording medium attached to an article that is to be sold in the country "C", recording is performed so that the alphabetic characters "Q" and "y" and the symbol "V" change in the manner illustrated in Figs. 6B to 6D and so that the alphabetic character "H" changes in the manner illustrated in Figs. 4B to 4D.

Therefore, if an article with a multi-viewpoint image recording medium on which the alphabetic character "Y" and the numeric character "7" change in the manner illustrated in Figs. 1B to 1D is found in the country "C", there is a possibility that import/export not intended by the manufacturer has been performed. Also, there is a possibility that the article or the multi-viewpoint image recording medium has been forged in the country "A".

### Third example configuration

Table 3 shows an example in which the serial numbers of articles are used as input information for the content illustrated in Fig. 8B.

**Table 3**

| Input information | Output information | | | | | |
|---|---|---|---|---|---|---|
| Serial number | Dynamic | Number | Target 1 | | Target 2 | |
| | | | Row | Column | Row | Column |
| ABCD | Brightness | 2 | 2 | 2 | 8 | 7 |
| EFGH | Brightness | 2 | 2 | 2 | 8 | 7 |
| IJKL | Brightness | 2 | 2 | 2 | 8 | 7 |
| MNOP | Brightness | 2 | 2 | 2 | 8 | 7 |
| QRST | Brightness | 2 | 2 | 2 | 8 | 7 |
| UVWX | Brightness | 2 | 2 | 2 | 8 | 7 |
| Yzab | Brightness | 2 | 2 | 2 | 8 | 7 |
| cdef | Brightness | 2 | 2 | 2 | 8 | 7 |

In this example, all the sub-images Is are the alphabetic characters "A", and thus the position of a sub-image to be changed is specified by a set of a row and a column where the sub-image is placed. That is, recording is performed so that the sub-images Is₁ and Is₂ illustrated in Fig. 8B change in the manner illustrated in Figs. 3B to 3D. The position of the sub-image to be changed can be specified by a set of a row and a column, x-y coordinates, a relative position with respect to a reference, or the like.

### Fourth example configuration

Table 4 shows an example in which the numbers of articles are used as input information for the content illustrated in Fig. 8B.

**Table 4**

| Input information | Output information | | | | | | | |
|---|---|---|---|---|---|---|---|---|
| Number of products | Dynamic | Number | Target 1 | | Target 2 | | Target 3 | |
| | | | Row | Column | Row | Column | Row | Column |
| 1-1000 | Thickness of line | 3 | 1 | 3 | 6 | 6 | 9 | 2 |
| 1001-2000 | Change of position | 1 | 2 | 5 | | | | |
| | Shape | 2 | 3 | 4 | 8 | 10 | | |
| 2001-3000 | Rotation 1 | 2 | 5 | 1 | 9 | 9 | | |
| | Change of position | 2 | 4 | 5 | 7 | 1 | | |
| 3001-4000 | Disappearance | 2 | 2 | 6 | 9 | 3 | | |
| 4001-5000 | Brightness + Shape | 3 | 1 | 2 | 6 | 1 | 8 | 2 |

In the example shown in Table 3, all the pieces of output information corresponding to the serial numbers of articles serving as input information are the same. In contrast, the example shown in Table 4 is an example in which output information varies depending on input information. For example, in multi-viewpoint image recording media attached to the 1 st to 1000th articles, recording is performed so that three "A"s change in the manner illustrated in Figs. 6B to 6D. On the other hand, in multi-viewpoint image recording media attached to the 2001 st to 3000th articles, recording is performed so that two "A"s change in the manner illustrated in Figs. 1B to 1D and so that other two "A"s change in the manner illustrated in Figs. 4B to 4D. In other words, recording is performed so that four "A"s change in accordance with movement of a viewpoint.

Such association is effective in the case of providing benefits only at the first production, for example. Also, if the year of manufacture is set as input information, the information recorded on a multi-viewpoint image recording medium can be used as a reference for determining whether or not the article having the multi-viewpoint image recording medium is a vintage article.

### Fifth example configuration

Table 5 shows an example in which the manufacturing plants of articles are used as input information for the content illustrated in Fig. 8C.

**Table 5**

| Input information | Output information | | | | |
|---|---|---|---|---|---|
| Manufacturing plant | Dynamic | Number | Target 1 | Target 2 | Target 3 |
| aa | Shape | 3 | 8 | 34 | 62 |
| bb | Shape | 3 | 8 | 34 | 62 |
| cc | Shape | 3 | 8 | 34 | 62 |
| dd | Shape | 3 | 8 | 34 | 62 |
| ee | Shape | 3 | 8 | 34 | 62 |
| ff | Shape | 3 | 8 | 34 | 62 |
| gg | Shape | 3 | 8 | 34 | 62 |
| hh | Shape | 3 | 8 | 34 | 62 |

In this example, not all the sub-images are the same, but there are some groups constituted by the same sub-images. In this case, for example, a number may be assigned to each sub-image Is, and the position of each sub-image Is may be specified using the number.

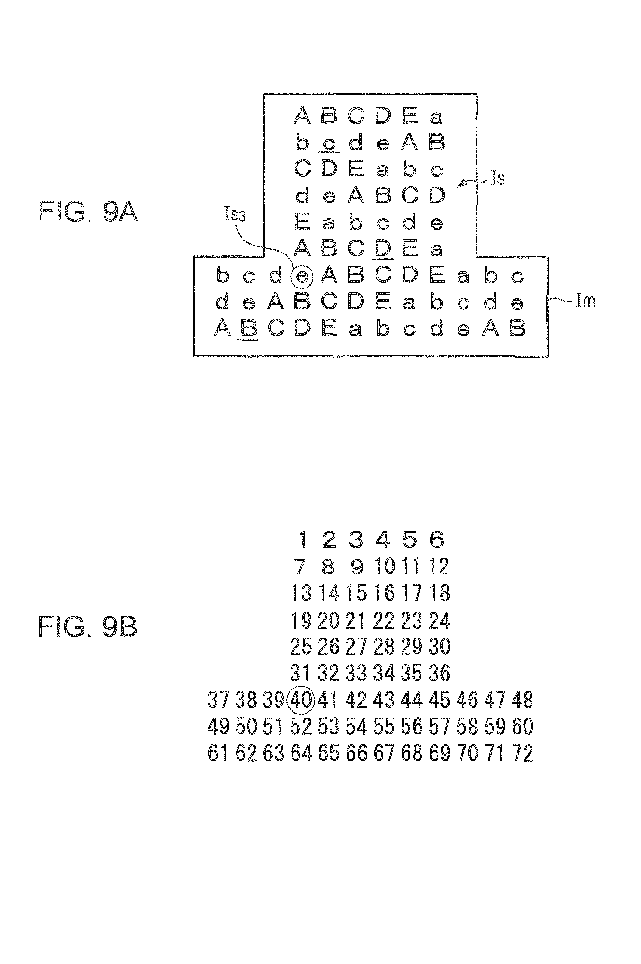

Figs. 9A and 9B are diagrams illustrating an example in which a number is assigned to each sub-image and the position of each sub-image is specified using the number. The individual sub-images illustrated in Fig. 9A are associated with the series of numbers illustrated in Fig. 9B. That is, the sub-image Is₃ illustrated in Fig. 9A is specified by the number "40".

In this example, the positions of the sub-images to be changed are specified by "8", "34", and "62" among the series of numbers illustrated in Fig. 9B. That is, recording is performed so that underlined "c", "D", and "B" illustrated in Fig. 9A change in the manner illustrated in Figs. 5B to 5D.

In this way, by using the manufacturing plants of articles as input information, defectives can be reliably distinguished even if the defectives are generated in a certain plant.

### Sixth example configuration

Table 6 shows an example in which the dimensions of articles are used as input information for the content illustrated in Fig. 8C.

**Table 6**

| Input information | Output information | | | | | |
|---|---|---|---|---|---|---|
| Dimension [mm] | Dynamic | Number | target 1 | Target 2 | Target 3 | Target 4 |
| 1.0×2.0 | Change of position | 3 | 15 | 36 | 65 | |
| 1.5×2.5 | Rotation 1 | 2 | 11 | 52 | | |
| | Disappearance | 2 | 33 | 72 | | |
| 2.0×3.0 | Brightness | 4 | 3 | 24 | 37 | 71 |
| ... | ... | ... | ... | ... | ... | ... |
| 5.0×6.0 | Thickness of line + Shape | 3 | 10 | 38 | 69 | |

In the example shown in Table 5, all the pieces of output information corresponding to the manufacturing plants of articles serving as input information are the same. In contrast, the example shown in Table 6 is an example in which output information varies depending on input information.

Such association is effective in the case of attaching a multi-viewpoint image recording medium to a standardized article, such as a battery. Alternatively, the dimension of a multi-viewpoint image recording medium itself may be set as input information.

### Seventh example configuration

Tables 7 and 8 show an example in which customer information and the months of manufacture of articles are used as input information for the content illustrated in Fig. 8A.

**Table 7**

| Input information | | | |
|---|---|---|---|
| Customer | α | Month of manufacture | β |
| a | 1 | January | 1 |
| b | 2 | February | 2 |
| c | 3 | March | 3 |
| d | 4 | April | 4 |
| e | 5 | May | 5 |
| f | 6 | June | 6 |
| g | 7 | July | 7 |

**Table 8**

| Output information | | | | | | | | |
|---|---|---|---|---|---|---|---|---|
| Last digit of α × β | Dynamic | Last digit of α + β | Number | Last digit of α - β | Target 1 | Target 2 | Target 3 | Target 4 |
| 0 | Brightness | 0 | 4 | 0 | A | d | 1 | * |
| 1 | Rotation 1 | 1 | 3 | 1 | C | V | q | 0 |
| 2 | Thickness of line | 2 | 2 | 2 | F | f | 5 | ⊙ |
| 3 | Change of position | 3 | 2 | 3 | I | m | 8 | ▲ |
| 4 | Shape | 4 | 3 | 4 | D | w | 3 | # |
| 5 | Disappearance | 5 | 2 | 5 | P | r | x | $ |
| 6 | Brightness + Thickness of line | 6 | 4 | 6 | H | e | t | 7 |
| 7 | Shape + Disappearance | 7 | 3 | 7 | K | d | 2 | °C |
| 8 | Rotation 1 + Shape | 8 | 2 | 8 | Q | h | 6 | □ |
| 9 | Rotation 2 | 9 | 2 | 9 | L | q | z | 4 |

In the example shown in Table 7, a number α is associated with customer information, and a number β is associated with the month of manufacture of an article. Then, α × β is calculated, and the value of a dynamic parameter is determined on the basis of the last digit of the product. Also, the value of a number parameter is determined on the basis of the last digit of the sum of α + β, and the value of a target parameter is determined on the basis of the last digit of the difference of α - β. For example, if the customer information is "e" and the month of manufacture is March, (α, β) = (5, 3). Thus, the value of the dynamic parameter is "Disappearance", the value of the number parameter is "2", and the values of the target parameters are "F", "f', "5", and "⊙". In this way, a plurality of types of input information may be used for association.

In this example, the number of target parameters is larger than the value "2" of the number parameter. In such a case, priority may be given to the values of the target parameters, or a target parameter may be arbitrarily extracted. Thus, in the case of creating a database for the association, the number of target parameters may be set so that the number of target parameters is not smaller than the value of the number parameter.

### Eighth example configuration

Tables 9 to 11 show an example in which information about the countries of manufacture is used as input information and an example in which customer information and the months of manufacture of articles are used as input information for the content illustrated in Fig. 8A.

**Table 9**

| Country of manufacture | Random number |
|---|---|
| AA | 948 |
| BB | 533 |
| CC | 431 |
| DD | 627 |
| EE | 598 |
| FF | 478 |
| GG | 383 |
| HH | 174 |
| II | 056 |

**Table 10**

| | | Month of manufacture | | | | |
|---|---|---|---|---|---|---|
| | | January | February | March | April | May |
| Customer | a | 541 | 716 | 406 | 225 | 036 |
| | b | 093 | 376 | 354 | 885 | 353 |
| | c | 293 | 210 | 230 | 682 | 434 |
| | d | 812 | 547 | 856 | 663 | 466 |
| | e | 304 | 707 | 187 | 496 | 909 |

**Table 11**

| Output information | | | | | | | | |
|---|---|---|---|---|---|---|---|---|
| Last digit of random number | Dynamic | Second last digit of number | Number | Third last digit of random number | Target 1 | Target 2 | target 3 | Target 4 |
| 0 | Brightness | 0 | 4 | 0 | A | d | 1 | * |
| 1 | Rotation 1 | 1 | 3 | 1 | C | V | q | 0 |
| 2 | Thickness of line | 2 | 2 | 2 | F | f | 5 | ⊙ |
| 3 | Change of position | 3 | 2 | 3 | I | m | 8 | ▲ |
| 4 | Shape | 4 | 3 | 4 | D | w | 3 | # |
| 5 | Disappearance | 5 | 2 | 5 | P | r | x | $ |
| 6 | Brightness + Thickness of line | 6 | 4 | 6 | H | e | t | 7 |
| 7 | Shape + Disappearance | 7 | 3 | 7 | K | d | 2 | °C |
| 8 | Rotation + Shape | 8 | 2 | 8 | Q | h | 6 | □ |
| 9 | Rotation 2 | 9 | 2 | 9 | L | q | z | 4 |

In the example shown in Table 9, random numbers are associated with information about the countries of manufacture. In the example shown in Table 10, random numbers are associated with sets of customer information and the month of manufacture of an article. Then, the value of a dynamic parameter is determined on the basis of the last digit of an associated random number in Table 11. Likewise, the value of a number parameter is determined on the basis of the second last digit of an associated random number, and the values of target parameters are determined on the basis of the third last digit of an associated random number.

In the case of using Tables 10 any 11, if the customer information is "e" and the month of manufacture is May, the associated random number is "909". Thus, the value of the dynamic parameter is "Rotation 2", the value of the number parameter is "4", and the values of the target parameters are "L", "q", "z", and "4". In this way, a random number table may be used for association. The dynamic parameter "Rotation 2" represents, for example, rotation around an axis including a recording surface.

### Ninth example configuration

Tables 12 and 13 show an example in which identification (ID) information given to articles or multi-viewpoint image recording media is used as input information for the content illustrated in Fig. 8A.

**Table 12**

| Input information | Output information | | | | | |
|---|---|---|---|---|---|---|
| ID information | Dynamic | Number | Target 1 | Target 2 | Target 3 | Target 4 |
| 00000001 | Rotation | 4 | c | b | k | 6 |
| 00000002 | Thickness of line | 3 | B | m | 8 | |
| ... | ... | ... | ... | ... | ... | |
| 0000000a | Brightness + Shape | 2 | T | g | | |
| ... | ... | ... | ... | ... | ... | ... |
| 0000000cd | Disappearance | 3 | N | s | O | |
| | Change of position | 2 | E | y | | |

**Tables 13**

| Output information | | | | | | | | |
|---|---|---|---|---|---|---|---|---|
| Third last digit of ID information | Dynamic | Last digit of ID information | Number | Second last digit of ID information | Target 1 | Target 2 | Target 3 | Target 4 |
| 0 | Thickness of line | 0 | 3 | 0 | B | e | 4 | |
| 1 | Disappearance | 1 | 2 | 1 | E | S | | |
| 2 | Brightness | 2 | 4 | 2 | D | p | 8 | # |
| ... | ... | ... | ... | ... | ... | ... | ... | ... |
| 9 | Shape | 9 | 3 | 9 | O | k | 3 | |
| a | Change of position | a | 4 | a | R | g | u | 9 |
| ... | ... | ... | ... | ... | ... | ... | ... | ... |
| d | Rotation 1 + Disappearance | d | 2 | d | J | Y | | |

In the example shown in Table 12, a dynamic parameter, a number parameter, and target parameters are determined for each piece of ID information.

In the example shown in Table 13, the value of the dynamic parameter is determined on the basis of the third last digit of the ID information. Likewise, the value of the number parameter is determined on the basis of the last digit of the ID information, and the values of the target parameters are determined on the basis of the second last digit of the ID information. That is, an amount characterizing change of a sub-image is determined through specific association on the basis of ID information.

Here, ID information is information that is given for identifying each article, multi-viewpoint image recording medium, or a combination of an article and a multi-viewpoint image recording medium. Such ID information may be recorded on a multi-viewpoint image recording medium, or may be recorded on an article or the wrapping thereof. In the case of not directly recording ID information on a multi-viewpoint image recording medium, certain association may be given between the information recorded on the multi-viewpoint image recording medium and the ID information. Alternatively, ID information may be held by a manufacturer, instead of being directly displayed on an article.

As a method for recording ID information, printing or laser marking may be used. Alternatively, a holographic recording method that has previously been suggested by the inventors of the present invention may be used. Of course, the form of recording ID information is not limited to a character string. For example, characters, numbers, symbols, figures, patterns, a one-dimensional barcode, a two-dimensional barcode, or a combination of these items may be used.

### 3. Third embodiment

In a third embodiment, in the case of producing a multi-surface master, different sub-images are added to respective surfaces of the multi-surface master.

By associating added sub-images with ID information, it can be judged whether or not the pattern of change of a sub-image with respect to certain ID information is an impossibility. Thus, according to the third embodiment, a further advanced authenticity judgment function can be given to a multi-viewpoint image recording medium.

### Addition of sub-images to multi-surface master

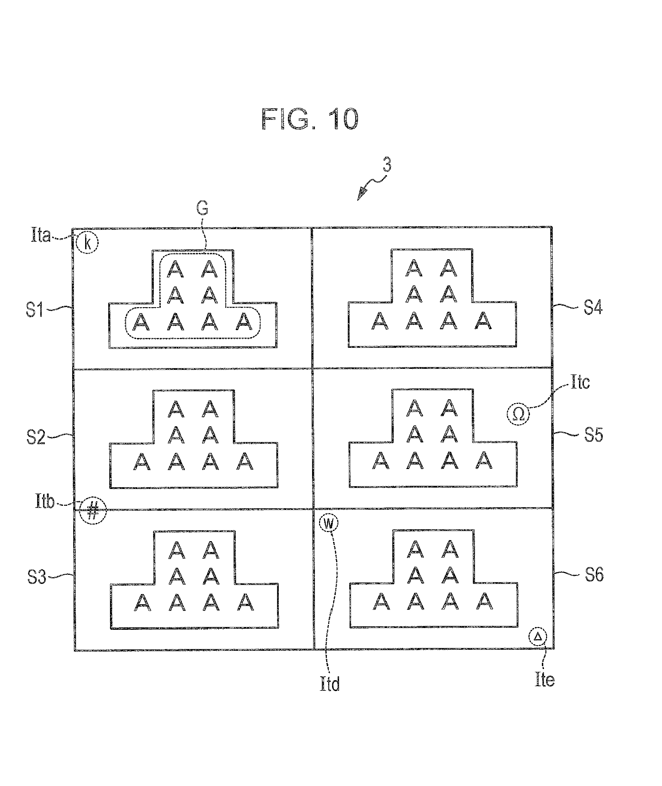

In the case of using a hologram recording medium as a multi-viewpoint image recording medium, when producing a multi-surface hologram master, different sub-images are added to pieces of hologram data of the respective surfaces. Fig. 10 illustrates a schematic diagram describing a hologram master added with sub-images Ita to Ite. In the example illustrated in Fig. 10, a hologram mater 3 has six surfaces S1 to S6. After replication has been performed on a hologram recording medium using the hologram master 3, six hologram recording media are obtained through cutting.

For easy understanding, a description will be given with reference to Fig. 10 under the assumption that the hologram master 3 has six surfaces. Also, in this example, it is assumed that the main image Im recorded on the hologram master 3 is common to all the surfaces, and that a group G of sub-images Is does not include an image that changes in accordance with the change of an observation direction.

As illustrated in Fig. 10, the alphabetic character "k" is recorded as the sub-image Ita at the upper left corner of the surface S1. The symbol "#" is recorded as the sub-image Itb over the boundary of the surface S2 and the surface S3. In this way, a sub-image may be placed over a plurality of surfaces.

No sub-image is recorded on the surface S4. In this way, there may be a surface having no sub-image recorded thereon. In this specification, addition of sub-images to a multi-surface hologram master includes a case where there is a surface that is not added with any sub-image other than the group G of sub-images.

The character "Ω" is recorded as the sub-image Itc on the right side on the surface S5. In this way, the position and size of sub-images may vary on the individual surfaces.

The character "w" is recorded as the sub-image Itd at the upper left corner of the surface S6, and the symbol "Δ" is recorded as the sub-image Ite at the lower right corner of the surface S6. In this way, there may be a plurality of sub-images on a single surface.

Unlike in the first and second embodiments, it is necessary to specify the size and position of different sub-images It to be added to the respective surfaces. The size of each sub-image It may be set depending on the effect that is to be obtained when a hologram recording medium replicated using the hologram master 3 is observed, that is, an overt effect, a covert effect, or a forensic effect. Thus, as in the first and second embodiments, the existence of sub-images may be recognized by appropriately selecting and using a device, such as a magnifying glass or a microscope.

### First example configuration

Table 14 shows an example of the case of replicating a hologram using the hologram master 3 in which different sub-images are added to the respective surfaces.

**Table 14**

| Surface | Dynamic | Number | Type | | Size [mm] | | | | Position of center point [mm] | | | |
|---|---|---|---|---|---|---|---|---|---|---|---|---|
| | | | Target 1 | Target 2 | Target 1 | | Target 2 | | Target 1 | | Target 2 | |
| | | | | | H | W | H | w | x | Y | x | Y |
| 1 | Thickness of line | 1 | k | - | 0.4 | 0.4 | - | - | 0.5 | 0.5 | - | - |
| 2 | Shape | 1 | ● | - | 0.6 | 0.5 | - | - | 0.5 | 3.0 | - | - |
| 3 | | | | | | | | | | | | |
| 4 | - | - | - | - | - | - | - | - | - | - | - | - |
| 5 | Change of position | 1 | Ω | - | 0.4 | 0.4 | - | - | 5.0 | 1.0 | - | - |
| 6 | Rotation | 2 | w | ■ | 0.2 | 0.2 | 0.2 | 0.2 | 0.5 | 0.5 | 5.5 | 2.5 |

The data shown in Table 14 corresponds to the hologram master 3 illustrated in Fig. 10. In Table 14, the dynamic parameter, the number parameter, and the target parameters of a sub-image It are specified for each surface. Also, the height H and the width W of the sub-image It, and the position of the center point (X, Y) of the sub-image It are specified. In this way, various parameters can be arbitrarily set for each surface.

### Second example configuration

Table 15 shows an example in which various parameters are associated with ID information.

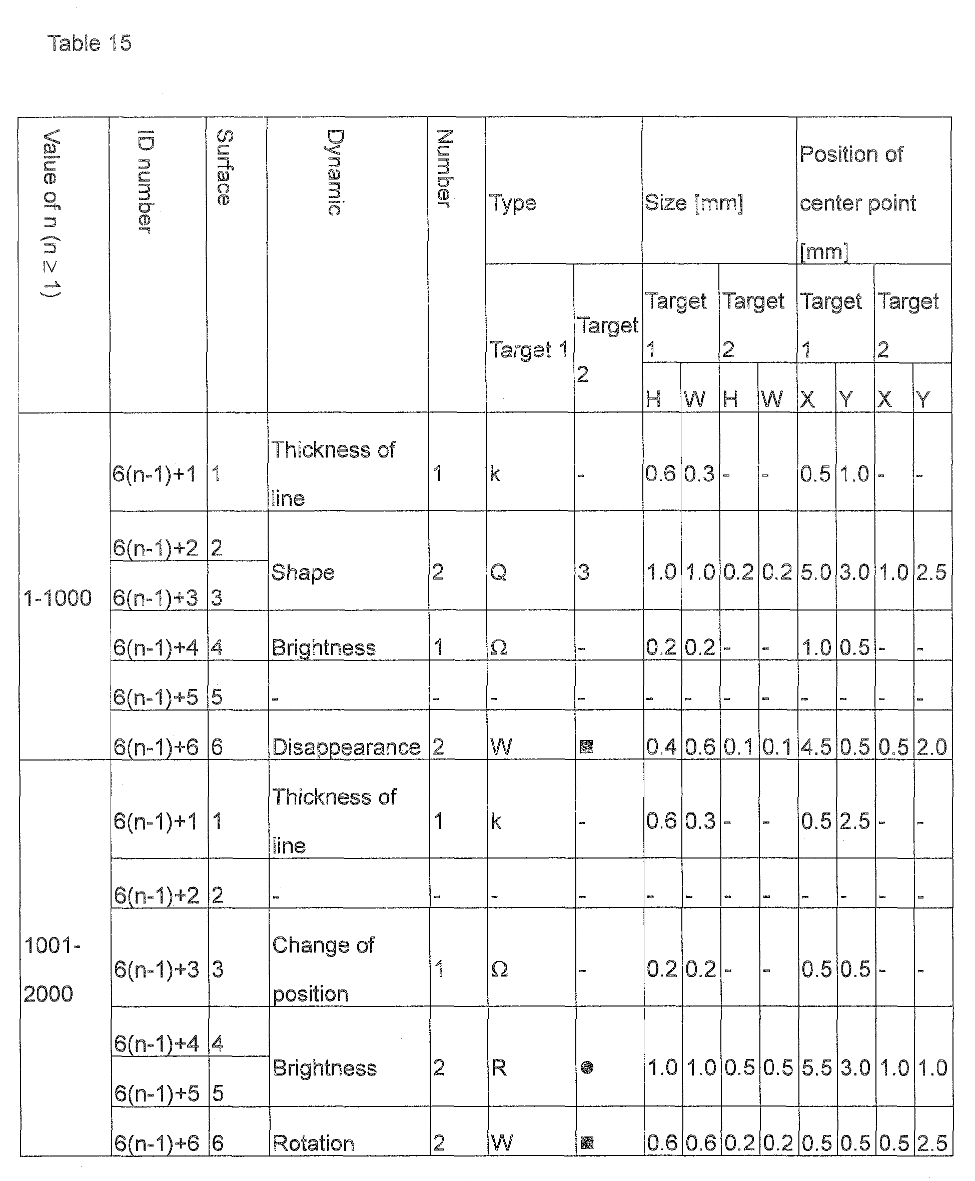

In the example shown in Table 15, the surfaces S1 to S6 are assigned to the individual pieces of ID information. Furthermore, a hologram master and a dynamic parameter are changed every time one thousand hologram recording media are replicated.

An observer of a replicated hologram recording medium can judge whether or not the hologram recording medium is genuine by comparing the pattern of change of a sub-image It with ID information. The association data shown in Table 15 may be held by a manufacturer side, and thus it is difficult to estimate such association from a replicated hologram recording medium.

In the above-described examples, the number of surfaces is six. If the number of surfaces is a few hundred, hundreds of different types of image patterns can be recorded. Thus, by associating the image patterns with ID information held by a manufacturer, it becomes very difficult to make unauthorized copies. Accordingly, hologram recording media having a great effect of preventing unauthorized copying can be obtained.

### 4. Fourth embodiment

In a fourth embodiment, ID information and the amounts characterizing the change of sub-images are registered in a database in association with each other with respect to a hologram recording medium having ID information and a sub-image that changes in accordance with movement of a viewpoint. An observer of a multi-viewpoint image recording medium judges the authenticity of the multi-viewpoint image recording medium by inquiring of the database about the form of change of a sub-image.

By associating the form of change of each sub-image with ID information, it can be judged whether or not the pattern of change of a sub-image corresponding to certain ID information is an impossibility by inquiring of the database via a network, such as the Internet. At the time of establishing association, encryption may be performed if necessary. The association data between the amounts characterizing changes of sub-images and ID information may be held by a manufacturer of articles or multi-viewpoint image recording media. It is difficult to estimate such association on the basis of the form of change of a sub-imageo

Therefore, according to the fourth embodiment, a further advanced authenticity judgment function can be given to multi-viewpoint image recording media.

### 5. Modification

Preferred embodiments have been described above, but the embodiments of the present invention are not limited to the above-described embodiments. For example, the above-described examples may be appropriately combined.

In the description given above, a hologram recording medium is used as a multi-viewpoint image recording medium. Alternatively, a plurality of main images and sub-images may be observed via a micro-lens array.

The multi-viewpoint image recording medium may be used for various items, such as wrapping of articles, noncontact IC cards, ID cards, cash cards, credit cards, employee ID cards, student ID cards, commuter passes, driver's licenses, passports, visas, securities, passbooks, revenue stamps, postage stamps, mobile phones, currencies, and lottery tickets. In the case of attaching a hologram recording medium serving as a multi-viewpoint image recording medium to an article via an adhesive layer or the like, it is desirable that the adhesive force of the adhesive layer is stronger than a self-combining force or a rupture strength of a hologram recording layer of the hologram recording medium. This is because, even if someone tries to peel off the hologram recording medium from an article and make an unauthorized contact copy using the hologram recording medium as a master, the hologram recording layer is broken, thereby preventing replication.

The present invention contains subject matter related to that disclosed in Japanese Priority Patent Application JP 2010-156102 filed in the Japan Patent Office on July 8, 2010, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. A multi-viewpoint image recording medium comprising:
at least one main image recorded on the multi-viewpoint image recording medium; and
a plurality of sub-images, each having a display area smaller than a display area of the main image, recorded on the multi-viewpoint image recording medium,
wherein the main image and the plurality of sub-images are simultaneously displayed when the main image and the plurality of sub-images are reproduced, and
wherein at least one of the plurality of sub-images changes in accordance with movement of a viewpoint.

2. The multi-viewpoint image recording medium according to Claim 1, wherein the plurality of sub-images are displayed in a region defined by the main image.

3. The multi-viewpoint image recording medium according to Claim 1, wherein the display area of each of the plurality of sub-images is 50 mm² or less, or one tenth or less of the display area of the main image.

4. The multi-viewpoint image recording medium according to Claim 1, wherein the change is a continuous change, and wherein the continuous change is rotation around an axis that is substantially vertical to a recording surface.

5. The multi-viewpoint image recording medium according to Claim 1, wherein the change is a continuous change, and wherein the continuous change is rotation around an axis including a recording surface.

6. The multi-viewpoint image recording medium according to Claim 1, wherein the change is a continuous change, and wherein the continuous change is a continuous change of brightness when at least one of the plurality of sub-images is observed.

7. The multi-viewpoint image recording medium according to Claim 1, wherein the change is a continuous change, and wherein the continuous change is a continuous change of a display position of at least one of the plurality of sub-images.

8. The multi-viewpoint image recording medium according to Claim 1, wherein the change is a continuous change, and wherein the continuous change is a continuous change of a shape of at least one of the plurality of sub-images.

9. The multi-viewpoint image recording medium according to Claim 1, wherein the change is a continuous change, and wherein the continuous change is a continuous change of a thickness of a line of at least one of the plurality of sub-images.

10. The multi-viewpoint image recording medium according to Claim 1, wherein the change includes a change in which at least one of the plurality of sub-images disappears.

11. The multi-viewpoint image recording medium according to Claim 1, wherein the main image and the plurality of sub-images are produced on the basis of a holographic stereogram.

12. The multi-viewpoint image recording medium according to Claim 1, wherein the main image and the plurality of sub-images are produced on the basis of a computer generated hologram.

13. The multi-viewpoint image recording medium according to Claim 1, wherein the main image and the plurality of sub-images are observed via a microlens array.

14. The multi-viewpoint image recording medium according to Claim 1,
wherein at least one of the plurality of sub-images moving in accordance with movement of a viewpoint is replicated from a sub-image added to each surface of a multi-surface master, and/or
wherein at least one of amounts characterizing a continuous change of at least one of the plurality of sub-images is determined thorough specific association, and/or
further comprising identification information recorded on the multi-viewpoint image recording medium, wherein at least one of amounts characterizing a continuous change of at least one of the plurality of sub-images is determined through specific association on the basis of the identification information.

15. An authenticity judgment method for performing authenticity judgment on a multi-viewpoint image recording medium which includes identification information recorded on the multi-viewpoint image recording medium, at least one main image recorded on the multi-viewpoint image recording medium, and a plurality of sub-images, each having a display area smaller than a display area of the main image, recorded on the multi-viewpoint image recording medium, the main image and the plurality of sub-images being simultaneously displayed when the main image and the plurality of sub-images are reproduced, at least one of the plurality of sub-images changing in accordance with movement of a viewpoint, the authenticity judgment method comprising:
preparing a database in which the identification information and an amount characterizing a change of at least one of the plurality of sub-images are registered in association with each other; and
inquiring of the database about the identification information and the amount characterizing a change of at least one of the plurality of sub-images.
